# EUROPEAN PATENT APPLICATION

(11) **EP 4 575 744 A1**
(43) Date of publication of application: **25.06.2025**
(21) Application number: 23867629.0
(22) Date of filing: 22.09.2023
(51) Int. Cl.: G06F 3/06

(54) **DATA MIGRATION METHOD AND APPARATUS, AND CHIP AND COMPUTER-READABLE STORAGE MEDIUM**

(30) Priority: 23.09.2022 CN 202211168045
(71) Applicant: Huawei Technologies Co., Ltd., Shenzhen, Guangdong 518129 (CN)
(72) Inventor: YANG, Chun, Shenzhen, Guangdong 518129 (CN); LU, Xiao, Shenzhen, Guangdong 518129 (CN); WANG, Guanhao, Shenzhen, Guangdong 518129 (CN); YANG, Rui, Shenzhen, Guangdong 518129 (CN); ZHU, Xiaoping, Shenzhen, Guangdong 518129 (CN); LUO, Xingyu, Shenzhen, Guangdong 518129 (CN)
(74) Representative: Maiwald GmbH
(86) International application number: PCT/CN2023/120667
(87) International publication number: WO 2024/061344

(57) **Abstract**

A data migration method and apparatus, a chip, and a computer-readable storage medium are provided, and relate to the field of storage technologies. In the method, when a data migration request for a storage unit in a first storage medium is obtained, data in the storage unit is migrated to a storage unit that is in a second storage medium and does not participate in unified addressing. In a migration process, a data access request of an application is routed to the first storage medium or the second storage medium by querying a mapping relationship in a second unit mapping table and a migration state in a migration table. After the migration is completed, an address of a second storage unit is allocated to the application. Because a storage unit that participates in migration does not need to be locked, a migration procedure is simplified. Correspondingly, data migration duration is reduced, and data migration efficiency is improved.

## Description

This application claims priority to Chinese Patent Application No. 202211168045.0, filed with the China National Intellectual Property Administration on September 23, 2022 and entitled "DATA MIGRATION METHOD AND APPARATUS, CHIP, AND COMPUTER-READABLE STORAGE MEDIUM", which is incorporated herein by reference in its entirety.

### TECHNICAL FIELD

This application relates to the field of storage technologies, and in particular, to a data migration method and apparatus, a chip, and a computer-readable storage medium.

### BACKGROUND

A processor of a computing device may be configured with a hybrid memory system including a plurality of storage media. For the processor, storage performance of the storage media in the hybrid memory system is different, and the processor may migrate data in a storage medium to another storage medium in the hybrid memory system, to make full use of the storage performance of the storage media.

Currently, a data migration process is as follows: Each storage medium in the hybrid memory system includes a plurality of pages. For a to-be-migrated page (that is, an old page) of a storage medium in the hybrid memory system, the processor first allocates a page (that is, a new page) of another storage medium to data in the old page; then obtains a page lock of the old page, cancels a mapping relationship for the old page in a page table, invalidates a TLB entry of the old page in a translation lookaside buffer (translation lookaside buffer, TLB); next obtains a page lock of the new page, and copies the data from the old page to the new page; and finally completes mapping of the new page through the page table, releases the page lock of the new page, and releases the old page and the page lock of the old page.

However, the foregoing data migration process depends on a page lock mechanism. The processor needs to separately obtain the page locks of the old page and the new page. After completing data migration, the processor further needs to release the page locks of the old page and the new page. The data migration procedure is complex, increasing data migration duration and reducing data migration efficiency.

### SUMMARY

This application provides a data migration method and apparatus, a chip, and a computer-readable storage medium, to improve data migration efficiency.

According to a first aspect, a data migration method is provided, where the method is applied to a hybrid memory system, the hybrid memory system includes a first storage medium and a second storage medium, and the method includes the following steps: obtaining a data migration request, where the data migration request indicates to migrate data in a first storage unit in the first storage medium to the second storage medium; then migrating the data in the first storage unit to a second storage unit in the second storage medium; and allocating, to the second storage unit, a first address associated with the first storage unit during unified addressing, where the second storage unit does not participate in the unified addressing in the hybrid memory system.

In the method, when a data migration request for a storage unit in the first storage medium is obtained, data in the storage unit is migrated to a storage unit that is in the second storage medium and does not participate in the unified addressing. Because the storage unit that does not participate in the unified addressing does not support access by an application, a write-data consistency maintenance problem does not exist in a process of migrating the data to the storage unit that does not participate in the unified addressing. Therefore, the storage unit that does not participate in the unified addressing does not need to be locked, so that a migration procedure is simplified. Correspondingly, data migration duration is reduced, and data migration efficiency is improved.

In a possible implementation, there is a mapping relationship between the first address and a second address of the first storage unit in the first storage medium, to indicate to allocate the first address to the first storage unit. In view of this, an implementation process of allocating, to the second storage unit, a first address associated with the first storage unit during unified addressing includes: modifying the second address in the mapping relationship to a second address of the second storage unit in the second storage medium.

Based on the foregoing possible implementations, decoupling of placement of the first address and the second address in the hybrid memory system is implemented, and data is migrated in different storage media without changing the first address, so that an execution procedure of a processor is not affected.

In another possible implementation, the method further includes the following steps: receiving a first data write request of an application, where the first data write request indicates to write the data into the first storage unit; then querying a migration state of the first storage unit based on the first data write request; and if the migration state is "being migrated", converting the first data write request into a second data write request, where the migration state indicates migration progress of the first storage unit, "being migrated" indicates that the data in the first storage unit is being migrated to the second storage unit, and the second data write request indicates to write the data into the second storage unit.

Based on the foregoing possible implementations, in a data migration process, if a processor writes the data into the first address, the processor writes the data into the first storage unit or the second storage unit based on the migration state of the first storage unit associated with the first address, to overwrite old data stored in the first address, and ensure that the data written into the first address is latest data, so that the processor can read the latest data from the first address subsequently.

In another possible implementation, the method further includes the following steps: receiving a first data read request of an application, where the first data read request indicates to read the data from a first cache line of the first storage unit; then obtaining, based on the first data read request, a write state of a second cache line that is of the second storage unit and corresponds to the first cache line; and if the write state is "writing completed", converting the first data read request into a second data read request, where the write state indicates progress of writing the data into the second cache line, "writing completed" indicates that the data has been written into the second cache line, and the second data read request indicates to read the data from the second cache line.

Based on the foregoing possible implementations, in a data migration process, if a processor reads the data in the first cache line of the first storage unit, the processor reads the data from the first storage unit or the second cache line based on the write state of the second cache line that is of the second storage unit and corresponds to the first cache line, to ensure that latest data is read.

In another possible implementation, a process of obtaining a data migration request includes: first performing data migration detection on the first storage medium; and then generating the data migration request if it is detected that the first storage unit meets a migration condition.

In another possible implementation, that the first storage unit meets a migration condition includes that a quantity of accesses to the first storage unit reaches a value range of a migration threshold. In view of this, the foregoing process of performing data migration detection on the first storage medium includes: detecting a data access request sent to the hybrid memory system, where the data access request indicates to access a storage unit in the hybrid memory system; and obtaining, based on the detected data access request, the quantity of accesses to the first storage unit.

In another possible implementation, that the first storage unit meets a migration condition includes that an access delay of the first storage medium is less than an access delay of the second storage medium, a quantity of idle storage units in the first storage medium is less than or equal to a quantity threshold, and the first storage unit is a non-idle storage unit whose quantity of accesses does not reach an access threshold. In view of this, the foregoing process of performing data migration detection on the first storage medium includes: first obtaining a quantity of accesses to each storage unit in the first storage medium; and then determining an idle storage unit and a non-idle storage unit in the first storage medium based on the quantity of accesses to each storage unit in the first storage medium.

Based on the foregoing possible implementations, the idle storage unit and the non-idle storage unit in the first storage medium are determined based on the quantity of accesses to each storage unit in the first storage medium, and there is no need to query, from the first storage medium, whether each storage unit stores the data. A determining manner is simple and quick.

In another possible implementation, the method further includes the following step: generating the data migration request if it is detected that the first storage unit meets the migration condition and a data access request of an application for the first storage unit is received.

Based on the foregoing possible implementation, when the application has a requirement for accessing the storage unit, the data migration request for the storage unit is generated, and data migration is performed on the storage unit, thereby avoiding invalid data migration.

In another possible implementation, before a step of migrating the data in the first storage unit to a second storage unit in the second storage medium, the method further includes the following step: determining the second storage unit from a candidate storage unit in the second storage medium, where the candidate storage unit is an idle storage unit that does not participate in the unified addressing.

Based on the foregoing possible implementations, the second storage unit is determined from the idle storage units that do not participate in the unified addressing, so that the data in the first storage unit is migrated to an idle storage unit that does not participate in the unified addressing. The idle storage unit that does not participate in the unified addressing does not support access by the application and does not store the data. Therefore, a write consistency problem does not occur when the data is migrated to the idle storage unit that does not participate in the unified addressing, so that the storage unit that does not participate in the unified addressing does not need to be locked, a migration procedure is simplified, and data migration efficiency is improved.

In another possible implementation, the candidate storage unit is located in a candidate storage unit queue of the second storage medium, and after the migrating the data in the first storage unit to a second storage unit, the method further includes the following steps: removing the second storage unit from the candidate storage unit queue; and if the candidate storage unit queue is not full of candidate storage units, adding, to the candidate storage unit queue, an idle storage unit that is in the second storage medium and participates in the unified addressing.

Based on the foregoing possible implementations, storage space that is in the second storage medium, that is used to store the migrated data, and that does not support the application in writing the data is dynamically maintained, so that subsequent data migration to the second storage medium is not affected.

According to a second aspect, a data migration method is provided, where the method is applied to a hybrid memory system, the hybrid memory system includes a first storage medium and a second storage medium, and the method includes the following steps: obtaining a data migration request, where the data migration request indicates to migrate data in a first storage unit in the first storage medium to the second storage medium; then determining a second storage unit from a candidate storage unit in the second storage medium; and migrating the data in the first storage unit to the second storage unit in the second storage medium, where the candidate storage unit is an idle storage unit that does not participate in unified addressing.

**In** the method, when a data migration request for a storage unit in the first storage medium is obtained, data in the storage unit is migrated to an idle storage unit that is in the second storage medium and does not participate in the unified addressing. Because the idle storage unit that does not participate in the unified addressing does not support access by an application and does not store the data, a write-data consistency maintenance problem does not exist in a process of migrating the data to the idle storage unit that does not participate in the unified addressing. Therefore, the idle storage unit that does not participate in the unified addressing does not need to be locked, so that a migration procedure is simplified. Correspondingly, data migration duration is reduced, and data migration efficiency is improved.

According to a third aspect, a data migration apparatus is provided. The apparatus includes modules configured to perform the data migration method in any one of the first aspect or the possible implementations of the first aspect, or the apparatus includes modules configured to perform the data migration method in the second aspect.

According to a fourth aspect, a chip is provided. The chip is configured to implement the operation steps of the data migration method in any one of the first aspect or the possible implementations of the first aspect, or the chip is configured to implement the operation steps of the data migration method in the second aspect.

According to a fifth aspect, a computer-readable storage medium is provided. The storage medium stores at least one piece of program code, and the program code is read by a processor, to cause a chip to perform the operation steps of the foregoing data migration method.

According to a sixth aspect, a computer program product or a computer program is provided. The computer program product or the computer program includes program code, the program code is stored in a computer-readable storage medium, a processor of a chip reads the program code from the computer-readable storage medium, and the processor executes the program code, to cause the chip to perform the method in the first aspect or the optional implementations of the first aspect.

In this application, the implementations provided in the foregoing aspects may be further combined to provide more implementations.

### BRIEF DESCRIPTION OF DRAWINGS

FIG. 1 is a diagram of an application system in a data migration and access method according to this application;
FIG. 2 is a diagram of a structure of an electronic device to which a data migration method is applied according to this application;
FIG. 3 is a diagram of a structure of another electronic device to which a data migration method is applied according to this application;
FIG. 4 is a flowchart of a data migration method according to this application;
FIG. 5 is a flowchart of obtaining a data migration request in a manner A according to this application;
FIG. 6 is a flowchart of obtaining a data migration request in a manner B according to this application;
FIG. 7 is a flowchart of a data migration process according to this application;
FIG. 8 is a flowchart of accessing a storage unit in a case in which data migration and data writing are performed in parallel according to this application;
FIG. 9 is a diagram of a data migration process in a case in which a first data write request reaches a manager before a migration read request according to this application;
FIG. 10 is a diagram of a data migration process in a case in which a first data write request reaches a manager after a migration read request and before a migration write request according to this application;
FIG. 11 is a diagram of a data migration process in a case in which a first data write request reaches a manager after a migration write request according to this application;
FIG. 12 is a flowchart of accessing a storage unit in a case in which data migration and data reading are performed in parallel according to this application;
FIG. 13 is a diagram of a data migration process in a case in which a first data read request reaches a manager after a migration write request according to this application;
FIG. 14 is a diagram of a data migration process in a case in which a processor accesses a first storage unit twice according to this application;
FIG. 15 is a flowchart of performing data migration based on an access command of a processor according to this application;
FIG. 16 is a diagram of a structure of a data processing apparatus according to this application;
FIG. 17 is a diagram of a structure of another data migration apparatus according to this application; and
FIG. 18 is a diagram of a structure of a chip according to this application.

### DESCRIPTION OF EMBODIMENTS

To improve data migration efficiency, this application provides a data migration method applied to a hybrid memory system. When data migration is required between two storage media in the hybrid memory system, a storage unit that participates in unified addressing and a storage unit that does not participate in the unified addressing are distinguished. When the data migration is performed, to-be-migrated data in a storage unit is migrated to a storage unit that is in another storage medium in the hybrid memory system and does not participate in the unified addressing.

The following further describes in detail the data migration method for the hybrid memory system provided in this application with reference to accompanying drawings.

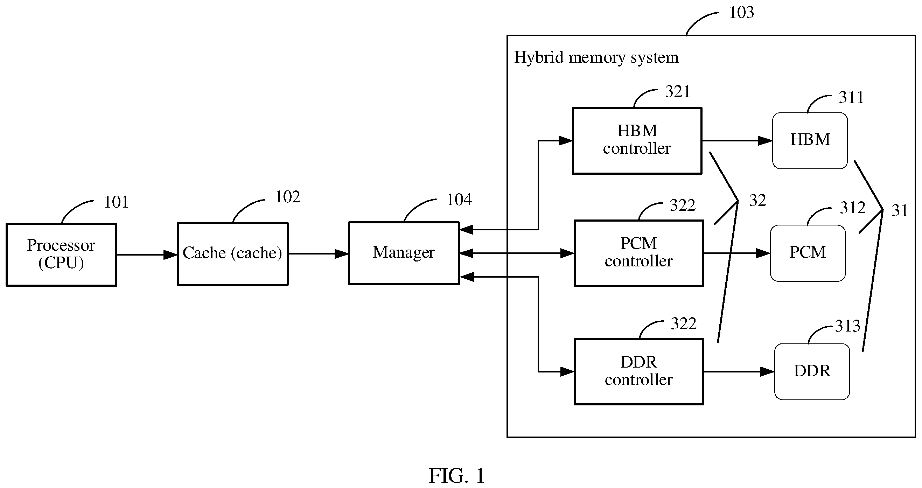

FIG. 1 is a diagram of an application system of a data migration access method according to this application. As shown in FIG. 1, the application system includes a processor 101, a cache (cache) 102, a hybrid memory system 103, and a manager 104 of the hybrid memory system 103. The processor 101 may be implemented in at least one hardware form of an application-specific integrated circuit (application-specific integrated circuit, ASIC), a digital signal processing (digital signal processing, DSP), a field programmable gate array (field programmable gate array, FPGA), or a programmable logic array (programmable logic array, PLA). Certainly, the processor 101 may alternatively have another hardware implementation. This is not limited in this application. The processor 101 is, for example, a central processing unit (central processing unit, CPU). In some embodiments, the processor 101 may alternatively be implemented using a graphics processing unit (graphics processing unit, GPU) or a data processing unit (data processing unit, DPU). The GPU is configured to be responsible for rendering and drawing content that needs to be displayed on a display screen. In some embodiments, the processor 101 may further include an artificial intelligence (artificial intelligence, AI) processor, and the AI processor is configured to process a computing operation related to machine learning.

The processor 101 accesses a storage medium 31 of the hybrid memory system 103, to read data from the storage medium 31 or write data into the storage medium 31. When accessing the storage medium 31, the processor 101 may copy a part of data in the storage medium 31 to the cache 102, so that the part of data can be quickly read from the cache 102 subsequently. In some other embodiments, the application system does not include the cache 102. In this case, the processor 101 directly accesses the storage medium 31.

The hybrid memory system 103 includes a plurality of types of storage media 31, and the plurality of types of storage media 31 are configured to store data (for example, code or service data). The plurality of types of storage media 31 are, for example, a static random access high bandwidth memory (high bandwidth memory, HBM) 311, a phase change memory (phase change memory, PCM) 312, and a double data rate synchronous dynamic random access memory (double data Rate SDRAM, DDR) 313 shown in FIG. 1. In some other embodiments, the hybrid memory system 103 includes any two of the three types of storage media, or includes another storage medium other than the three types of storage media. The another storage medium is, for example, a magnetic random access memory (magnetic random access memory, MRAM) or a static random access memory (static random access memory, SRAM). A quantity of storage media 31 and a type of the storage medium 31 in the hybrid memory system 103 are not limited herein in this embodiment of this application.

The hybrid memory system 103 further includes a controller 32 of the storage medium 31, and the controller 32 is configured to implement data exchange between the corresponding storage medium 31 and the processor 101. As shown in FIG. 1, controllers 32 of the HBM 311, the PCM 312, and the DDR 313 are respectively an HBM controller 321, a PCM controller 322, and a DDR controller 323.

As shown in FIG. 1, the manager 104 is configured to connect the cache 102 and each controller 32. In some other embodiments, the application system does not include the cache 102. In this case, the manager 104 is configured to connect the processor 101 and each controller 32. The manager 104 is used as an upper-level controller of the controller 32, and exchanges data with the processor 101. For example, when the processor 101 accesses the HBM 311, the processor 101 delivers an access request for the HBM 311 to the manager 104, the manager 104 sends a data access request to the HBM controller 321, and the HBM controller 321 accesses the HBM 311 based on the data access request, where the data access request indicates to access a storage unit in the hybrid memory system 103.

In addition, different storage media 31 in the hybrid memory system 103 have different storage performance. For example, some storage media 31 have a large storage capacity but a high access delay, and some storage media 31 have a small storage capacity but a low access delay. The manager 104 is further configured to migrate data in any storage medium 31 to another storage medium 31 in the hybrid memory system 103 by using the data migration method, to give full play to advantageous performance of each storage medium 31 in the hybrid memory system 103.

The manager 104 is implemented by software, hardware, or a combination of software and hardware. As an example of a software functional unit, the manager 104 includes code running on a compute instance. The compute instance includes at least one of a virtual machine and a container. Further, there may be one or more compute instances. For example, the manager 104 includes code running on a plurality of virtual machines/containers. In addition, the plurality of virtual machines/containers configured to run the code may be distributed in a same region (region), or may be distributed in different regions. Further, the plurality of virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region or crossregion communication between VPCs in different regions. Interconnection between VPCs is implemented through the communication gateway.

As an example of a hardware functional unit, the manager 104 may be a device implemented by using an application-specific integrated circuit (application-specific integrated circuit, ASIC), a programmable logic device (programmable logic device, PLD), or the like. The PLD may be a complex programmable logical device (complex programmable logical device, CPLD), a field programmable gate array (field programmable gate array, FPGA), a generic array logic (generic array logic, GAL), or any combination thereof.

In some embodiments, the application system shown in FIG. 1 is provided by an electronic device. The electronic device may be a server, or may be a terminal device. The server is, for example, a cloud server, a central server, an edge server, a remote server in a remote data center, or a local server in a local data center. The terminal device may be a desktop computer, a notebook computer, a smartphone, or the like. In this case, the storage medium 31 in the hybrid memory system 103 may be an on-chip memory (on-chip memory), a memory externally connected to the processor 101, or a storage medium in a storage device connected to the electronic device through a serial bus. The serial bus is, for example, a high-speed serial computer expansion bus standard (peripheral component interconnect express, PCIE) bus, a compute express link (compute express link, CXL) bus, or a cache coherent interconnect for accelerators protocol (cache coherent interconnect for accelerators, CCIX) bus. A location of the storage medium 31 in the hybrid memory system 103 is not limited herein in this embodiment of this application.

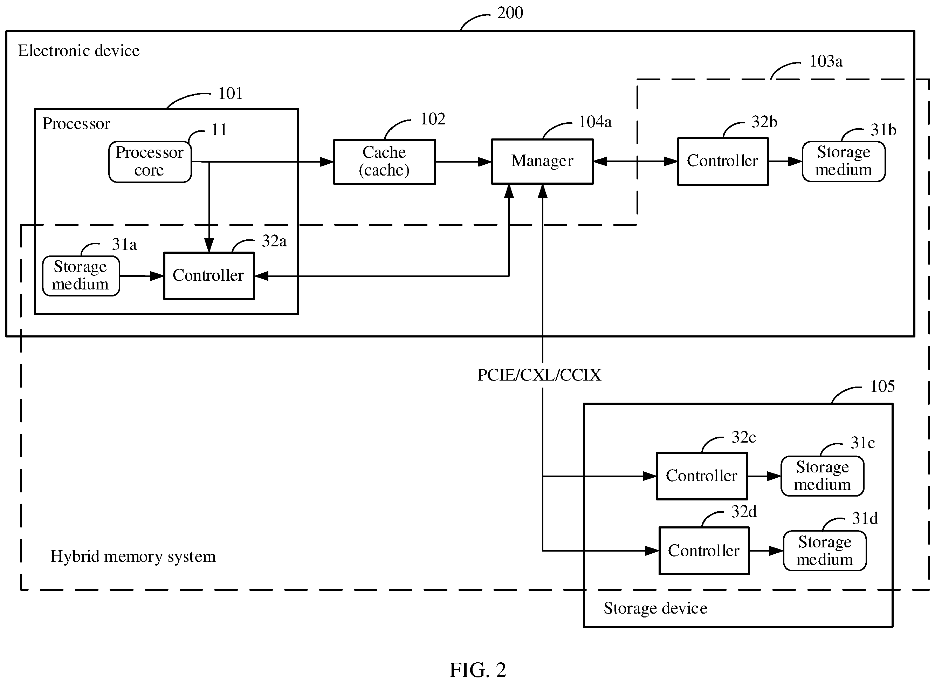

For example, FIG. 2 is a diagram of a structure of an electronic device to which a data migration method is applied according to this application. With reference to FIG. 2, the electronic device 200 includes a processor 101, a cache 102, and a manager 104a of a hybrid memory system 103a, and the processor 101 includes at least one processor core 11 and a storage medium 31a. In the electronic device 200, the processor 11 is further externally connected to a storage medium 31b. The electronic device 200 is connected to a storage device 105 through a PCIE/CXL/CCIX bus, and the storage device 105 includes a storage medium 31c and a storage medium 31d.

As shown in FIG. 2, the hybrid memory system 103a includes the storage medium 31a to the storage medium 31d, and controllers of the storage medium 31a to the storage medium 31d are respectively controllers 32a, 32b, 32c, and 32d. Each storage medium in the hybrid memory system 103a is connected to the manager 104a through a respective controller, so that the manager 104a serves as a bridge for communication between the hybrid memory system 103a and the processor 101. It should be understood that the storage media 31a to 31d are respectively different types of storage media, and there may be at least one storage medium of each type in the hybrid memory system 103a.

The storage medium 31a is an HBM, a DDR, a PCM, or the like integrated on a chip of the processor 101. The storage medium 31b is an HBM, a DDR, a PCM, or the like that is externally connected to the processor 101 in the electronic device. The storage medium 31c or the storage medium 31d is an HBM, a DDR, a PCM, or the like in the storage device 105. Types of the storage media 31a to 31d are not limited herein in this embodiment of this application.

It may be understood that the hybrid memory system 103a in FIG. 2 is an example of the hybrid memory system 103 in FIG. 1. In some other embodiments, the hybrid memory system 103a does not include any one of the storage media 31a and 31d, or does not include the storage media 31c and 31d. The manager 104a in FIG. 2 is an example of the manager 104 in FIG. 1. If the manager 104a is used as a hardware functional unit, the manager 104a is configured to connect the cache 102 and each controller 32 in the hybrid memory system 103a. For example, the manager 104a is integrated in a host memory bridge (host memory bridge) between the cache 102 and the controller 32. Alternatively, the manager 104a is used as an independent chip, and is connected to the host memory bridge and each controller 32.

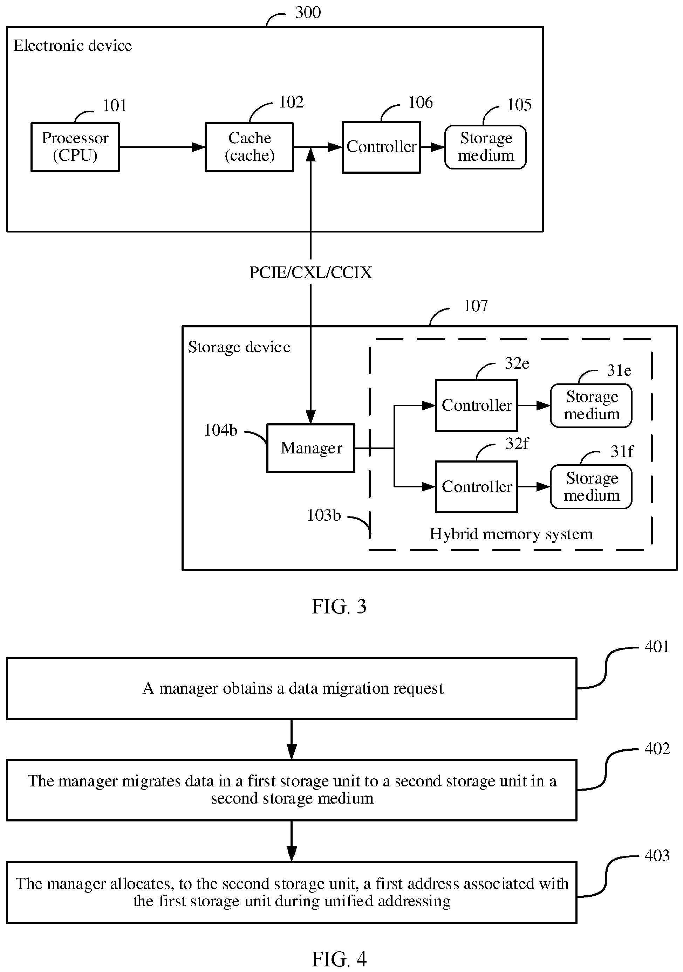

In some other embodiments, the storage medium in the hybrid memory system 103 includes only a storage medium in a storage device connected to the electronic device through a serial bus. For example, FIG. 3 is a diagram of a structure of another electronic device to which a data migration method is applied according to this application. With reference to FIG. 3, the electronic device 300 includes a processor 101, a cache 102, at least one storage medium 105, and a controller 106 of each storage medium 105. The electronic device 300 is connected to a storage device 107 through a PCIE/CXL/CCIX bus. The storage device 107 includes a hybrid memory system 103b and a manager 104b of the hybrid memory system 103b. The hybrid memory system 103b includes a storage medium 31e, a controller 32e of the storage medium 31e, a storage medium 31f, and a controller 32f of the storage medium 31. Both the controller 32e and the controller 32f are connected to the manager 104b. FIG. 3 shows an example in which the hybrid memory system 103b includes two storage media. In some embodiments, the hybrid memory system 103b includes more than two storage media 31. A type of the storage medium 31 in the hybrid memory system 103b is not limited herein in this embodiment of this application.

It may be understood that the hybrid memory system 103b shown in FIG. 3 is an example of the hybrid memory system 103 shown in FIG. 1, and the manager 104b is an example of the manager 104. If the manager 104b is used as a hardware functional unit, a difference from FIG. 2 lies in that, in the embodiment shown in FIG. 3, the manager 104b is located in the storage device connected to the electronic device and the manager 104a shown in FIG. 2 is located in the electronic device.

Based on the foregoing descriptions of the application system, the following describes a data migration method provided in this application.

FIG. 4 is a flowchart of a data migration method according to this application. The method is applied to a hybrid memory system. The hybrid memory system includes a first storage medium and a second storage medium. The method includes the following steps.

Step 401: A manager obtains a data migration request, where the data migration request indicates to migrate data in a first storage unit in the first storage medium to the second storage medium.

The hybrid memory system includes a plurality of types of storage media. For example, the hybrid memory system is any hybrid system described above. Each storage medium in the hybrid memory system includes a plurality of storage units, and the storage units are configured to store data. For example, the storage units are pages in the storage medium. The storage unit is a basic unit for data migration, and a data capacity of the storage unit may be 4 kilobytes (kilobytes, KB), 64 KB, or 2 megabytes (MBytes, MB). The data capacity of the storage unit is not limited herein in this embodiment of this application.

Storage units in each type of storage medium are classified into candidate storage units and non-candidate storage units for data migration, where a quantity of the candidate storage units in the storage medium is less than a quantity of the non-candidate storage units in the storage medium. A processor in an electronic device performs unified addressing on non-candidate storage units of the plurality of types of storage media in the hybrid memory system, to obtain a physical address of each non-candidate storage unit, thereby organizing the non-candidate storage units of the plurality of types of storage media into storage space provided by the hybrid memory system for an application.

It may be understood that the non-candidate storage unit is a storage unit that participates in the unified addressing, so that the processor accesses the non-candidate storage unit (for example, stores data in the non-candidate storage unit or reads data in the non-candidate storage unit) when running the application, that is, the non-candidate storage unit is a storage unit that supports access by the application. The candidate storage unit is an idle storage unit that does not participate in the unified addressing. To distinguish a storage unit that participates in the unified addressing from a storage unit that does not participate in the unified addressing, the manager establishes a mapping relationship between a physical address and a medium address for each storage unit that participates in the unified addressing, and adds a medium address of a storage unit that does not participate in the unified addressing to a candidate storage unit queue corresponding to a storage medium to which the storage unit belongs, where a medium address of a storage unit indicates a location of the storage unit in a storage medium to which the storage unit belongs. In view of this, the manager may subsequently migrate, based on a medium address in the candidate storage unit queue, data stored in a non-candidate storage unit in a storage medium to a candidate storage unit in another storage medium, that is, a candidate storage unit is an idle storage unit that supports data migration and does not support access by the application.

A physical address of a non-candidate storage unit indicates a location of a storage unit in the storage space. For example, the non-candidate storage unit is a page in a storage medium. The physical address is a page frame number of the page in the hybrid memory system. In addition, the processor further allocates a virtual address in virtual storage space to each non-candidate storage unit, where the virtual address of the non-candidate storage unit is transparent to the application, and the application accesses the non-candidate storage unit through the virtual address.

In some embodiments, a controller of each type of storage medium stores a first mapping relationship between a physical address and a virtual address of each respective non-candidate storage unit. For example, the first mapping relationship is recorded in a first unit mapping table. For example, in the first unit mapping table shown in Table 1, the first unit mapping table includes a plurality of first unit mapping entries, each first unit mapping entry includes a physical address and a virtual address of a non-candidate storage unit, and each first unit mapping entry is a first mapping relationship between the physical address and the virtual address of the non-candidate storage unit.

**Table 1**

| Physical address | Virtual address |
|---|---|
| 00000001 | 00000001 |
| 00000002 | 00000004 |
| 00000003 | 00000005 |
| ... | ... |

The first storage medium is any storage medium in the hybrid memory system, and the second storage medium is any storage medium that is in the hybrid memory system and that supports data exchange with the first storage medium. For example, the hybrid memory system includes a storage medium 1 to a storage medium 3. When data exchange is supported between the storage medium 1 and the storage medium 2 and data exchange is not supported between the storage medium 1 and the storage medium 3, if the storage medium 1 is the first storage medium, the storage medium 2 is the second storage medium. When the storage medium 1 to the storage medium 3 support data exchange with each other, if the storage medium 1 is the first storage medium, the second storage medium may be the storage medium 2 or 3.

The first storage unit is any non-candidate storage unit to which the to-be-migrated data belongs in the first storage medium, the data migration request includes a physical address of the first storage unit and a medium attribute identifier of the second storage medium, and the medium attribute identifier indicates the second storage medium. In addition, when the manager knows that data migration is supported between the first storage medium and the second storage medium, the data migration request does not include the medium attribute identifier of the second storage medium.

The manager obtains the data migration request in at least one of a manner A or a manner B described below.

Manner A: The manager receives the data migration request of the processor for the first storage unit.

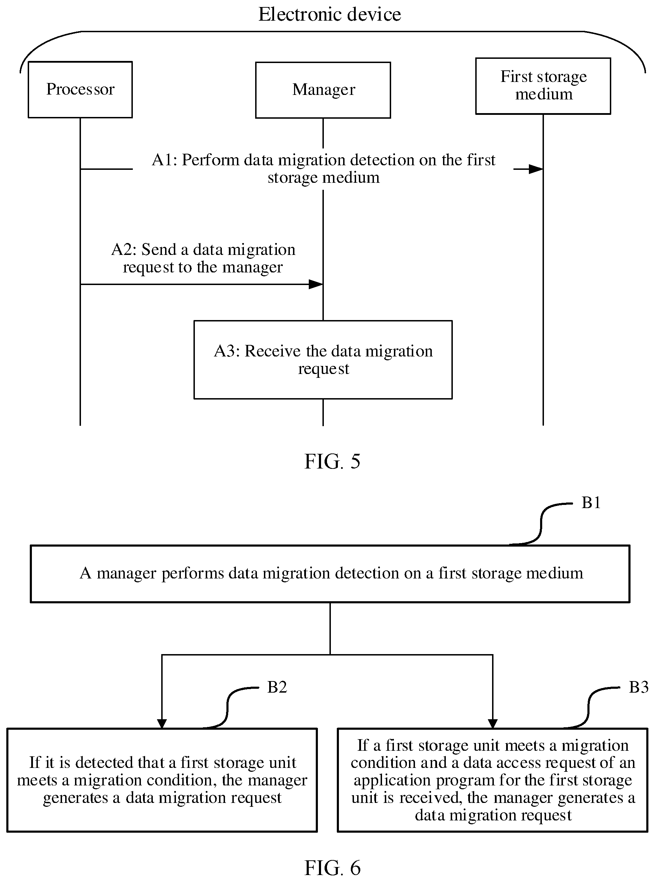

With reference to a flowchart of obtaining a data migration request in the manner A according to this application, as shown in FIG. 5, the manner A is described as follows.

Step A1: The processor performs data migration detection on the first storage medium.

The processor performs data migration detection on the first storage medium, to determine whether each storage unit (that is, a candidate storage unit) that is in the first storage medium and that supports access by the application meets a migration condition.

In a possible implementation, that the storage unit meets the migration condition includes that a quantity of accesses to the storage unit reaches a value range of a migration threshold, where the quantity of accesses is a quantity of times that the processor accesses the storage unit, and the value range of the migration threshold is determined based on access delays of the first storage medium and the second storage medium. For example, if the access delay of the first storage medium is greater than the access delay of the second storage medium, the value range of the migration threshold is greater than or equal to a first migration threshold; or if the access delay of the first storage medium is less than the access delay of the second storage medium, the value range of the migration threshold is greater than 0 and less than or equal to a second migration threshold. The first migration threshold is greater than the second migration threshold. Based on the migration condition, a process of performing data migration detection on the first storage medium is described as follows.

The electronic device in which the hybrid memory system is located is further provided with a statistics collecting unit. The statistics collecting unit periodically collects, based on a data access request delivered by the processor to the first storage medium, statistics on quantities of accesses to a plurality of storage units that are in the first storage medium and participate in the unified addressing, and periodically provides the processor with the quantities of accesses to the plurality of storage units. A manner in which the statistics collecting unit periodically provides the processor with the quantities of accesses to the plurality of storage units is as follows. For example, each time one statistics periodicity passes, the statistics collecting unit sends, to the processor, quantities of accesses to the plurality of storage units that are obtained through statistics collection in the current periodicity. For another example, the statistics collecting unit stores quantities of accesses to the plurality of storage units that are obtained through statistics collection in a recent statistics periodicity, and the processor periodically or aperiodically reads the latest quantities of accesses to the plurality of storage units from the statistics collecting unit, to determine, based on the quantities of accesses to the storage units, whether the storage units meet the migration condition. For another example, each time one statistics periodicity passes, the statistics collecting unit stores, in the first storage medium, quantities of accesses to the plurality of storage units that are obtained through statistics collection in the current periodicity, and the processor periodically or aperiodically reads latest quantities of accesses to the storage units from the first storage medium, to determine, based on the quantities of accesses to the storage units, whether the storage units meet the migration condition.

The statistics collecting unit may be implemented by hardware or in a form of software. When the statistics collecting unit is implemented by the hardware, the statistics collecting unit is a chip. The chip is implemented by a CPU, or may be implemented by an ASIC, or may be implemented by a PLD. The PLD may be a CPLD, an FPGA, a GAL, a data processing unit (data processing unit, DPU), a system-on-chip (system-on-chip, SoC), or any combination thereof. The chip may be integrated into a manager, a processor, a first controller of the first storage medium, or a riser card having the first storage medium inserted therein.

After obtaining the quantities of accesses to the plurality of storage units, the processor determines, based on the quantities of accesses to the storage units and the value range of the migration threshold, whether the storage units meet the migration condition. For example, for the first storage unit in the first storage medium, if the access delay of the first storage medium is greater than the access delay of the second storage medium, and a quantity of accesses to the first storage unit is greater than or equal to the first migration threshold, the first storage unit meets the migration condition. In this case, the first storage unit is a storage unit frequently accessed by the processor (that is, a hot page), and data in the first storage unit is data frequently accessed by the processor (that is, hot data). Then, the hot data in the first storage unit is migrated to the second storage medium with the lower access delay, so that the data can be quickly read from the second storage medium subsequently.

If the access delay of the first storage medium is less than the access delay of the second storage medium, and a quantity of accesses to the first storage unit is less than or equal to the second migration threshold, the first storage unit meets the migration condition. In this case, the first storage unit is a storage unit not frequently accessed by the processor (that is, a cold page), and data in the first storage unit is data not frequently accessed by the processor (that is, cold data). Then, the cold data in the first storage unit is migrated to the second storage medium with the higher access delay, so that the first storage unit stores data that is in the second storage medium and is frequently accessed by the processor, and the processor can quickly obtain the frequently accessed data.

In some other embodiments, after obtaining quantities of accesses to storage units in the first storage medium, the processor first sorts the quantities of accesses to the storage units, to obtain a quantity sequence, and then determines, based on the quantity sequence and the value range of an access threshold, whether the storage units in the first storage medium meet the migration condition.

For example, if the access delay of the first storage medium is greater than the access delay of the second storage medium, the processor sequentially compares, starting from a smallest quantity of accesses in the quantity sequence, a quantity of accesses in the quantity sequence with the first migration threshold. If any quantity of accesses is less than the first migration threshold, the processor compares a next quantity of accesses of the any quantity of accesses in the quantity sequence with the first migration threshold. If any quantity of accesses is greater than or equal to the first migration threshold, a storage unit corresponding to the any quantity of accesses in the quantity sequence and a storage unit corresponding to a quantity of accesses after the any quantity of accesses meet the migration condition. The comparison ends. Alternatively, the processor sequentially compares, starting from a largest quantity of accesses in the quantity sequence, a quantity of accesses in the quantity sequence with the first migration threshold. If any quantity of accesses is greater than or equal to the first migration threshold, the processor compares a next quantity of accesses of the any quantity of accesses in the quantity sequence with the first migration threshold. If any quantity of accesses is less than the first migration threshold, a storage unit corresponding to a quantity of accesses before the any quantity of accesses in the quantity sequence meets the migration condition. The comparison ends.

If the access delay of the first storage medium is less than the access delay of the second storage medium, the processor sequentially compares, starting from a largest quantity of accesses in the quantity sequence, a quantity of accesses in the quantity sequence with the second migration threshold. If any quantity of accesses is greater than the second migration threshold, the processor compares a next quantity of accesses of the any quantity of accesses in the quantity sequence with the second migration threshold. If any quantity of accesses is less than or equal to the second migration threshold, a storage unit corresponding to the any quantity of accesses in the quantity sequence and a storage unit corresponding to a quantity of accesses after the any quantity of accesses meet the migration condition. The comparison ends. Alternatively, the processor sequentially compares, starting from a smallest quantity of accesses in the quantity sequence, a quantity of accesses in the quantity sequence with the first migration threshold. If any quantity of accesses is less than or equal to the second migration threshold, the processor compares a next quantity of accesses of the any quantity of accesses in the quantity sequence with the first migration threshold. If any quantity of accesses is greater than the second migration threshold, a storage unit corresponding to a quantity of accesses before the any quantity of accesses in the quantity sequence meets the migration condition. The comparison ends.

For either of the first migration threshold and the second migration threshold, a quantity of accesses to a storage unit in the first storage medium is compared with the migration threshold based on the quantity sequence, to determine a storage unit that meets the migration condition. Therefore, there is no need to compare the quantities of accesses in the quantity sequence with the migration threshold one by one, thereby improving efficiency of determining the storage unit that meets the migration condition. Correspondingly, if the access delay of the first storage medium is greater than the access delay of the second storage medium, and the quantity of accesses to the first storage unit is less than the first migration threshold, the first storage unit does not meet the migration condition. If the access delay of the first storage medium is less than the access delay of the second storage medium, and the quantity of accesses to the first storage unit is greater than the second migration threshold, the first storage unit does not meet the migration condition.

In addition, the foregoing descriptions are provided using an example in which the statistics collecting unit periodically sends the quantities of accesses to the storage units of the first storage medium to the processor. In some other embodiments, the statistics collecting unit stores the quantities of accesses to the storage units of the first storage medium, and after obtaining quantities of accesses to the storage units that are obtained through statistics collection in a current periodicity, updates the previously stored quantities of accesses to the storage units to the quantities of accesses to the storage units that are obtained through the statistics collection in the current periodicity. The processor periodically or aperiodically reads latest quantities of accesses to the storage units from the statistics collecting unit, to determine, based on the quantities of accesses to the storage units, whether the storage units meet the migration condition. Alternatively, each time one statistics periodicity passes, the statistics collecting unit stores, in the first storage medium, quantities of accesses to the storage units that are obtained through statistics collection in a current periodicity, and the processor periodically or aperiodically reads latest quantities of accesses to the storage units from the first storage medium, to determine, based on the quantities of accesses to the storage units, whether the storage units meet the migration condition.

Step A2: If it is detected that the first storage unit in the first storage medium meets the migration condition, the processor generates the data migration request, and sends the data migration request to the manager.

For example, if it is detected that the first storage unit meets the migration condition, and the quantity of accesses to the first storage unit provided by the statistics collecting unit corresponds to a virtual address of the first storage unit, the processor queries a first mapping relationship for a physical address corresponding to the virtual address, and generates the data migration request based on the physical address. Alternatively, if it is detected that the first storage unit meets the migration condition, and the quantity of accesses to the first storage unit provided by the statistics collecting unit corresponds to a physical address of the first storage unit, the processor generates the data migration request based on the physical address. In this case, the data migration request includes the physical address.

Correspondingly, if the plurality of storage units in the first storage unit meet the migration condition, the processor generates one data migration request for each storage unit that meets the migration condition, and sends the generated data migration request to the manager.

Step A3: The manager receives the data migration request.

Manner B: The manager generates the data migration request for the first storage unit.

With reference to a flowchart of obtaining a data migration request in the manner B according to this application below, as shown in FIG. 6, the manner B is described as follows.

Step B1: The manager performs data migration detection on the first storage medium.

The manager performs data migration detection on the first storage medium in any one of the following manners B11 to B13.

Manner B11: The manager obtains quantities of accesses to a plurality of storage units that are in the first storage medium and participate in the unified addressing, where the quantities of accesses to the plurality of storage units are obtained through statistics collection by a statistics collecting unit, and determines, based on the quantities of accesses to the storage units and a value range of a migration threshold, a storage unit that meets a migration condition.

The manner B11 is similar to the foregoing manner A.

Manner B12: The manager detects a data access request sent to the hybrid memory system, where the data access request indicates to access a storage unit in the hybrid memory system, and determines, based on the detected data access request, the storage unit that meets a migration condition.

The data access request includes a physical address of the to-be-accessed storage unit in the first storage medium.

When the processor accesses any non-candidate storage unit in the hybrid memory system, the processor sends the data access request for the storage unit to the manager, and the manager parses the received data access request, to obtain a physical address of the storage unit, thereby implementing detection on the data access request. Each time first duration elapses, the manager collects, by using the first duration as a statistics periodicity, statistics on a quantity of times of parsing out each physical address in the first duration, and uses, as a quantity of accesses to a corresponding storage unit, the quantity of times of parsing out the physical address obtained through the statistics collection.

For example, the manager sets a quantity of accesses to each non-candidate storage unit in the hybrid memory system. Initially, a quantity of accesses to each storage unit is 0. In any first duration, each time a physical address of any storage unit is parsed out, a quantity of accesses to the any storage unit is increased by 1. When the first duration ends, the manager obtains the quantity of accesses to each storage unit. In addition, when the first duration ends, the manager further clears the quantity of accesses to each storage unit to 0, to perform counting in next first duration, so that the quantity of accesses to each storage unit can indicate a status of accessing the storage unit in a recent time period. Therefore, the manager determines, based on the status of accessing the storage unit in the recent time period, whether to perform data migration on the storage unit, thereby improving accuracy of data migration.

When quantities of accesses to storage units in the hybrid memory system are obtained, quantities of accesses to storage units in the first storage medium are obtained. Then, the manager determines, based on the quantities of accesses to the storage units and a value range of a migration threshold, whether the storage units meet a migration condition. For this process, refer to a process in which the processor determines, based on the quantities of accesses to the storage units and the value range of the migration threshold, whether the storage units meet the migration condition.

That the first storage unit meets the migration condition includes that an access delay of the first storage medium is less than an access delay of the second storage medium, a quantity of idle storage units in the first storage medium is less than or equal to a quantity threshold, and the first storage unit is a non-idle storage unit whose quantity of accesses does not reach an access threshold. The manager performs data migration detection on the first storage medium in the following manner B13. An idle storage unit is a storage unit that does not store data, and a non-idle storage unit is a storage unit that stores data. In this case, the migration threshold is a second migration threshold.

Manner B13: The manager detects an idle storage unit and a non-idle storage unit in the first storage medium, and determines, based on the idle storage unit and the non-idle storage unit, a storage unit that meets a migration condition.

When an access delay of the first storage medium is less than an access delay of the second storage medium, the manager obtains, by using first duration as a periodicity, quantities of accesses to storage units in the first storage medium in the first duration (where, for an obtaining manner, refer to the foregoing manner B11 or manner B12). For any storage unit in the first storage medium, if a quantity of accesses to the any storage unit is greater than 0, the any storage unit is a non-idle storage unit; otherwise, the first storage unit is an idle storage unit.

The manager determines the idle storage unit and the non-idle storage unit in the first storage medium based on the quantities of accesses to the storage units in the first storage medium, without querying, from the first storage medium, whether each storage unit stores data. A determining manner is simple and quick. However, in some embodiments, the manager queries, from the first storage medium, whether each storage unit stores data, to determine the idle storage unit and the non-idle storage unit in the first storage medium. The determined idle storage unit and the determined non-idle storage unit are accurate.

After determining the non-idle storage unit and the idle storage unit in the storage medium, if a quantity of idle storage units in the first storage medium is less than or equal to a quantity threshold, a quantity of accesses to the first storage unit is less than or equal to a second migration threshold, and the first storage unit is a non-idle storage unit, the manager determines that the first storage unit meets the migration condition; otherwise, the first unit does not meet the migration condition.

The quantity threshold is greater than 0 and less than or equal to 0.1%, 0.01%, or 0.001% of a quantity of the storage units in the first storage medium, or the quantity threshold is 0. A value range of the quantity threshold is not limited herein in this embodiment of this application.

If the quantity of idle storage units in the first storage medium is less than or equal to the quantity threshold, it indicates that currently available storage space in the first storage medium is small. If the quantity of accesses to the first storage unit is less than or equal to the second migration threshold, and the first storage unit is a non-idle storage unit, it indicates that data in the first storage unit is cold data. In this case, it is determined that the first storage unit meets the migration condition, and data migration on the first storage unit is triggered. Then, the cold data in the first storage unit is migrated to the second storage medium with the higher access delay. Therefore, the first storage unit becomes an idle storage unit, so that the first storage medium can have more idle storage units to store hot data.

Step B2: If it is detected that the first storage unit meets the migration condition, the manager generates the data migration request.

Step B2 is similar to step A2, and step B2 is not described herein again in this embodiment of this application.

Step B3: If the first storage unit meets the migration condition and the data access request of the application for the first storage unit is received, the manager generates the data migration request.

The application is any application run by the processor. In a process of running the application, the processor generates a data access request of the application for a storage unit in the hybrid memory system, and sends the data access request to the manager. If the manager parses out a physical address of the first storage unit from the data access request, it indicates that the data access request is the data access request of the application for the first storage unit. In this case, if the first storage unit meets the migration condition, the manager generates the migration request.

In a possible implementation, the manager records a trigger identifier for a storage unit in the hybrid memory system, to indicate whether to trigger generation of a data migration request when a data access request of the application for the storage unit is received. The trigger identifier includes a first trigger identifier and a second trigger identifier, the first trigger identifier indicates that the generation of the data migration request is triggered when the data access request of the application for the storage unit is received, and the second trigger identifier indicates that the generation of the data migration request is not triggered when the data access request of the application for the storage unit is received.

A manner of recording the trigger identifier for the storage unit is as follows. For example, the manager stores a second mapping relationship between each storage unit (that is, non-candidate storage units) that is in the hybrid memory system and that supports access by the program and a trigger identifier. In some embodiments, the second mapping relationship is recorded in a second unit mapping table, for example, a second unit mapping table shown in Table 2. The second unit mapping table includes a plurality of second unit mapping entries, and each second unit mapping entry includes a first address, a second address, a medium attribute identifier, and a trigger identifier of one storage unit. The first address is any one of a physical address and a virtual address of the storage unit. In this embodiment of this application, an example in which the first address is the physical address of the storage unit is used for descriptions. The second address is an address of the storage unit in a storage medium to which the storage unit belongs. In other words, the second address is a medium address of the storage unit. For example, the storage unit is a page. The second address is a page frame number of the storage unit in the storage medium to which the storage unit belongs. In this case, a second mapping relationship between the storage unit and the trigger identifier is that there is a mapping relationship between the first address of the storage unit and the second address of the storage unit in the storage medium to which the storage unit belongs, to indicate to allocate the first address during the unified addressing of the hybrid memory system to the storage unit.

The medium attribute identifier indicates the storage medium to which the storage unit belongs. In Table 2, an example in which the hybrid memory system includes two storage media: a DDR and a PCM is used. It should be understood that the hybrid memory system may further include another storage medium than the DDR and the PCM, or the hybrid memory system does not include the DDR and the PCM, but includes another storage medium than the DDR and the PCM. In Table 2, a character (for example, "DDR" or "PCM") is used as an example of the medium attribute identifier. In some embodiments, the manager allocates one medium number to each storage medium in the hybrid memory system, and the medium attribute identifier is a medium number of a storage medium.

**Table 2**

| First address | Second address | Medium attribute identifier | Trigger identifier |
|---|---|---|---|
| 00000001 | 000001 | "DDR" | First trigger identifier |
| 00000002 | 000001 | "PCM" | First trigger identifier |
| 00000003 | 000002 | "PCM" | Second trigger identifier |
| ... | ... | ... | ... |

Based on the second mapping relationship, a process in which the manager generates data migration based on the mapping relationship is described as follows.

In some embodiments, initially, for any storage unit, a trigger identifier in a second mapping relationship of the any storage unit is a second trigger identifier. If the any storage unit meets the migration condition, the manager updates the second trigger identifier corresponding to the any storage unit in the second mapping relationship to a first trigger identifier. Then, if the manager receives any data access request sent by the processor, the manager obtains a trigger identifier of a to-be-accessed storage unit indicated by the any data access request. If the trigger identifier is a first trigger identifier, the manager generates a data migration request for the to-be-accessed storage unit, and modifies the trigger identifier to a second trigger identifier; otherwise, the manager does not generate a data migration request for the to-be-accessed storage unit, and does not modify the trigger identifier.

Therefore, only when the storage unit meets the migration condition and there is a requirement for accessing the storage unit, the manager performs data migration on the storage unit. When the storage unit meets the migration condition, but there is no requirement for accessing the storage unit, the manager does not need to perform data migration on the storage unit. This reduces a quantity of times that the manager performs migration on the storage unit, and reduces a workload of the manager.

In some other embodiments, for the first storage unit in the first storage medium, if the access delay of the first storage medium is greater than the access delay of the second storage medium, and the first storage unit meets the migration condition, the manager records a trigger identifier corresponding to the first storage unit in a second mapping relationship as a first trigger identifier; or if the access delay of the first storage medium is less than the access delay of the second storage medium, the manager records a trigger identifier corresponding to the first storage unit in a second mapping relationship as a second trigger identifier.

If the access delay of the first storage medium is greater than the access delay of the second storage medium, it indicates that the processor preferentially accesses data in the second storage medium. Even if a storage unit in the first storage medium meets the migration condition, the processor may not access the storage unit any more. Therefore, in a second mapping relationship, a trigger identifier corresponding to the storage unit is recorded as a first trigger identifier. In this way, when the application subsequently has a requirement for accessing the storage unit, a data migration request for the storage unit is generated, and data migration is performed on the storage unit, thereby avoiding invalid data migration. If the access delay of the first storage medium is less than the access delay of the second storage medium, it indicates that the processor preferentially accesses data in the first storage medium. In the second mapping relationship, the trigger identifier corresponding to the storage unit is recorded as a second trigger identifier. Then, when the storage unit in the first storage medium meets the migration condition, data migration is performed on the storage unit, and the data migration does not need to be performed until a data access request is delivered. In this way, more storage units are freed up for the first storage medium to store hot data in the second storage medium with the lower access delay.

Step B2 and step B3 are parallel solutions. The manager performs either of step B2 and step B3. Alternatively, if the access delay of the first storage medium is less than the access delay of the second storage medium, the manager generates the data access request according to step B2; or if the access delay of the first storage medium is greater than the access delay of the second storage medium, the manager generates the data access request according to step B3.

Step 402: The manager migrates the data in the first storage unit to a second storage unit in the second storage medium, where the second storage unit does not participate in the unified addressing in the hybrid memory system.

The second storage unit is any storage unit that is in the second storage medium and does not participate in the unified addressing in the hybrid memory system.

In some embodiments, the second storage medium includes a plurality of candidate storage units, and the manager migrates the data in the first storage unit to any candidate storage unit in the plurality of candidate storage units. In this case, the any candidate storage unit is also the second storage unit.

In some other embodiments, before migrating the data in the first storage unit to the second storage unit, the manager first determines the second storage unit from the candidate storage units of the second storage medium. For example, the manager stores a candidate storage unit queue of the second storage medium, and the candidate storage unit queue includes second addresses of the plurality of candidate storage units. The manager uses, as the second storage unit, a storage unit indicated by a second address at a head of the candidate storage unit queue, and migrates the data to the second storage unit.

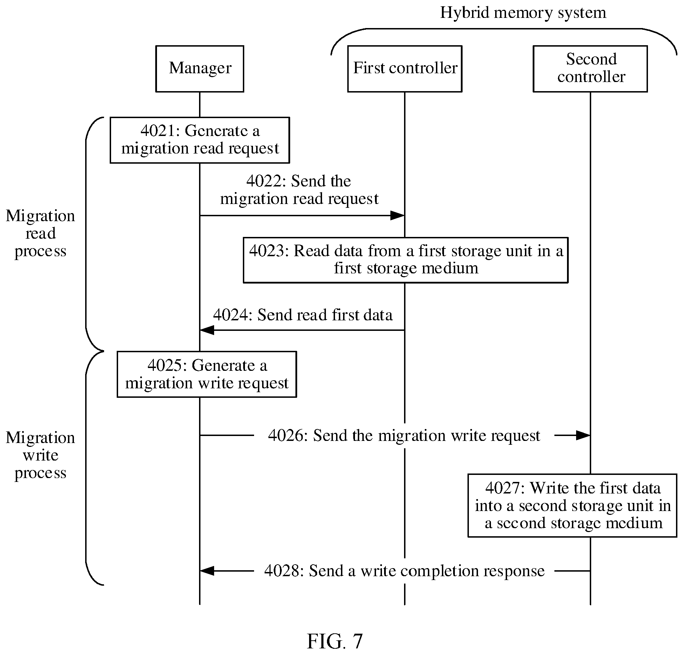

With reference to a flowchart of a data migration process according to this application, as shown in FIG. 7, the data migration process in step 402 is described as follows.

The data migration process includes a migration read process and a migration write process. The migration read process is to read data from the first storage unit. The migration read process includes the following steps 4021 to 4024. The migration write process is to write read data into the second storage unit. The migration write process includes the following steps 4025 to 4028.

Step 4021: The manager generates a migration read request based on a second address of the first storage unit, where the migration read request indicates to read the data from the first storage unit.

The migration read request includes the second address of the first storage unit.

The manager stores a third mapping relationship between a first address and a second address of each storage unit that is in the hybrid memory system and does not participate in the unified addressing, to indicate to allocate the first address to the storage unit indicated by the second address.

In some embodiments, the third mapping relationship is recorded in a third unit mapping table, for example, a third unit mapping table shown in Table 3. The third unit mapping table includes a plurality of third unit mapping entries, and each third unit mapping entry includes a first address, a second address, and a medium attribute identifier of one storage unit that participates in the unified addressing.

**Table 3**

| First address | Second address | Medium attribute identifier |
|---|---|---|
| 00000001 | 000001 | "DDR" |
| 00000002 | 000001 | "PCM" |
| 00000003 | 000002 | "PCM" |
| ... | ... | ... |

The first storage unit is used as an example. The manager obtains the physical address of the first storage unit from a migration request, uses the physical address as a first address of the first storage unit, obtains, from a third mapping relationship of the first storage unit, a second address corresponding to the first address of the first storage unit, and generates a migration read request based on the second address.

In addition, the manager stores either of the second unit mapping table and the third unit mapping table. For example, if the second unit mapping table is stored in the manager, the third unit mapping table does not need to be stored, but three columns of content of the first address, the second address, and the medium attribute identifier in the second unit mapping table are used as the third unit mapping table. If the second unit mapping table is not stored in the manager, the manager stores the third mapping unit mapping table. It should be understood that the second unit mapping table or the third unit mapping table is a mapping table newly added by the manager for the hybrid memory system, and is used to record storage units to which first addresses (for example, physical addresses) obtained through the unified addressing in the hybrid memory system are allocated. Therefore, after migration on a storage unit is completed subsequently, the manager reallocates, based on the newly added mapping table, a first address allocated to the storage unit. For any one of the first unit mapping table to the third unit mapping table, a plurality of columns in the unit mapping table may be stored in a same location, to form one table, so as to indicate a mapping relationship. Alternatively, a plurality of columns may not be stored in a same location, and each column is a separate table. When querying a unit mapping table, the manager uses entries in a same row in a plurality of tables, to indicate a mapping relationship for query.

Step 4022: The manager sends the migration read request to a first controller of the first storage medium.

The first controller is a controller of the first storage medium.

Step 4023: The first controller reads the data from the first storage unit in the first storage medium based on the received migration read request.

For example, the first controller obtains the second address of the first storage unit from the received migration read request, and reads the data from the first storage unit based on the second address.

Step 4024: The first controller sends read first data to the manager.

The first data is the data read from the first storage unit. After receiving the first data, the manager performs the following step 4025.

Step 4025: The manager generates a migration write request based on a second address of the second storage unit and the received first data, where the migration write request indicates to write the first data into the second storage unit.

The migration write request includes the second address of the second storage unit and the first data.

For example, the manager first obtains the second address of the second storage unit from the candidate storage unit queue of the second storage medium, and then generates the migration write request based on the second address of the second storage unit and the received first data.

Step 4026: The manager sends the migration write request to a second controller of the second storage medium.

The second controller is a controller of the second storage medium.

Step 4027: The second controller writes the first data into the second storage unit in the second storage medium based on the received migration write request.

For example, the second controller obtains the second address of the second storage unit and the first data from the received migration write request, and writes the first data into the second storage unit based on the second address.

Step 4028: After the writing is completed, the second controller sends a write completion response to the manager, where the write completion response indicates that the first data has been written into the second storage unit.

When the manager receives the write completion response, the migration is completed. If the manager determines the second storage unit from the candidate storage units, after the migration is completed, the manager removes the second storage unit from the candidate storage unit queue. For example, the manager pops out a 1^{st} second address in the candidate storage unit queue from the candidate storage unit queue, and moves each remaining second address in the candidate storage unit queue to a location of a previous second address, so that an original 2^{nd} second address in the candidate storage unit queue is used as the 1^{st} second address, and so on.

After at least one candidate storage unit in the candidate storage unit queue is removed, the candidate storage unit queue is not full of candidate storage units. If the candidate storage unit queue is not full of candidate storage units, the manager adds an idle storage unit in the second storage medium to the candidate storage unit queue, to dynamically maintain storage space that is in the second storage medium, that is used to store the migrated data, and that does not support the application in writing the data, so that subsequent data migration to the second storage medium is not affected.

For example, if data in a third storage unit in the second storage medium has been migrated, the manager queries whether the candidate storage unit queue has full candidate storage units. If the candidate storage unit queue is not full of candidate storage units, the manager adds a second address of the third storage unit after a last second address in the candidate storage unit queue. The third storage unit is a non-candidate storage unit in the second storage medium, and that the data in the third storage unit has been migrated means that the data in the third storage unit has been migrated to another storage unit.

Alternatively, if the candidate storage unit queue is not full of candidate storage units, the manager queries an idle storage unit from a plurality of storage units that are in the second storage medium and participate in the unified addressing, and sequentially adds second addresses of found idle storage units after the last second address in the candidate storage unit queue, until the candidate storage unit queue has full storage units. It should be understood that, when a second address of any storage unit that does not participate in the unified addressing is added to the candidate storage unit queue, the storage unit changes from a role of a non-candidate storage unit to a candidate storage unit.

Step 403: The manager allocates, to the second storage unit, the first address associated with the first storage unit during the unified addressing.

There is a mapping relationship between the first address and the second address of the first storage unit in the first storage medium, to indicate to allocate the first address to the first storage unit, where the mapping relationship is, for example, the third mapping relationship of the first storage unit.

In some embodiments, the manager modifies, in the third mapping relationship of the first storage unit, the second address of the first storage unit to the second address of the second storage unit, to allocate, to the second storage unit, the first address associated with the first storage unit during the unified addressing.

For example, the manager uses the physical address of the first storage unit as the first address associated with the first storage unit, and queries the third unit mapping table for the first address of the first storage unit. For a third unit mapping entry in which the found first address is located, a second address in the third unit mapping page entry is modified to the second address of the second storage unit, and a medium attribute identifier of the first storage medium is modified to the medium attribute identifier of the second storage medium.

The third unit mapping table shown in Table 3 is still used as an example. If a second mapping relationship between the first address and the second address of the first storage unit is recorded by a 1^{st} unit mapping entry in Table 3, the second storage medium is the PCM, and the second address of the second storage unit is 000010, the manager updates the second address "000001" in the 1^{st} unit mapping entry to "000010", and updates a medium attribute identifier "DDR" to "PCM", to obtain the following Table 4. In this case, for the manager, a first address 1 is an address of the second storage unit in the hybrid memory system.

**Table 4**

| First address | Second address | Medium attribute identifier |
|---|---|---|
| 00000001 | 000010 | "PCM" |
| 00000002 | 000001 | "PCM" |
| 00000003 | 000002 | "PCM" |
| ... | ... | ... |

For the processor, storage space provided by the hybrid memory system is fixed, and the storage space includes storage units indicated by first addresses in the third storage unit mapping table. Even if the manager allocates, to the second storage unit, the first address associated with the first storage unit, for the processor, the first address does not change. Therefore, in this embodiment of this application, decoupling of placement of the first address and the second address in the hybrid memory system is implemented based on the third mapping relationship, and data is migrated in different storage media without changing the first address, so that an execution procedure of the processor is not affected.

**In** addition, when a first address is a physical address of a storage unit, the application perceives a virtual address that is in the hybrid memory system and is allocated to the application. When the application accesses the storage unit in the hybrid memory system, the processor runs the application, and generates a data access request of the application, where the data access request carries the virtual address of the to-be-accessed storage unit in the hybrid memory system. Then, the processor converts the virtual address in the data access request into the physical address based on a first mapping relationship in the hybrid memory system, and then sends, to the manager, a data access request that carries the physical address. The manager queries, by using the physical address in the data access request as the first address, a third mapping relationship for a second address corresponding to the first address, and accesses the storage unit indicated by the found second address. However, in the data migration process, the first address in the third mapping relationship does not change. Therefore, in the data migration process, a procedure of running the application on the processor is not interrupted, so that the application is unaware of data migration.

In the data migration method shown in FIG. 4, when a data migration request for a storage unit in the first storage medium is obtained, data in the storage unit is migrated to a storage unit that is in the second storage medium and does not participate in the unified addressing. Because the storage unit that does not participate in the unified addressing does not support access by the application, a write-data consistency maintenance problem does not exist in a process of migrating the data to the storage unit that does not participate in the unified addressing. Therefore, the storage unit that does not participate in the unified addressing does not need to be locked, so that a migration procedure is simplified. Correspondingly, data migration duration is reduced, and data migration efficiency is improved. In some other embodiments, the data migration method shown in FIG. 4 includes step 401 and step 402. After step 402 is performed, data migration is completed. In this case, data is still migrated to a storage unit that does not participate in the unified addressing, and the migration procedure can still be performed. Correspondingly, the data migration duration is reduced, and the data migration efficiency is improved.

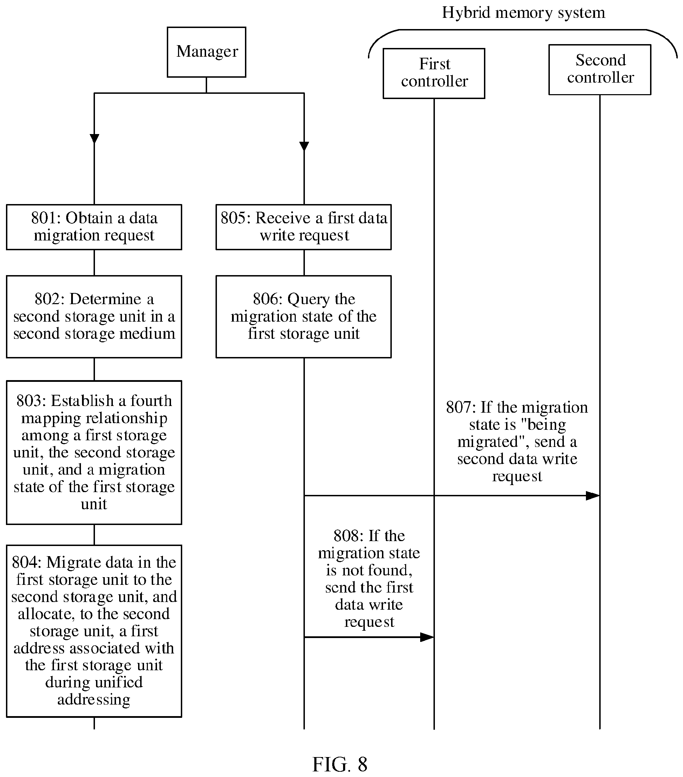

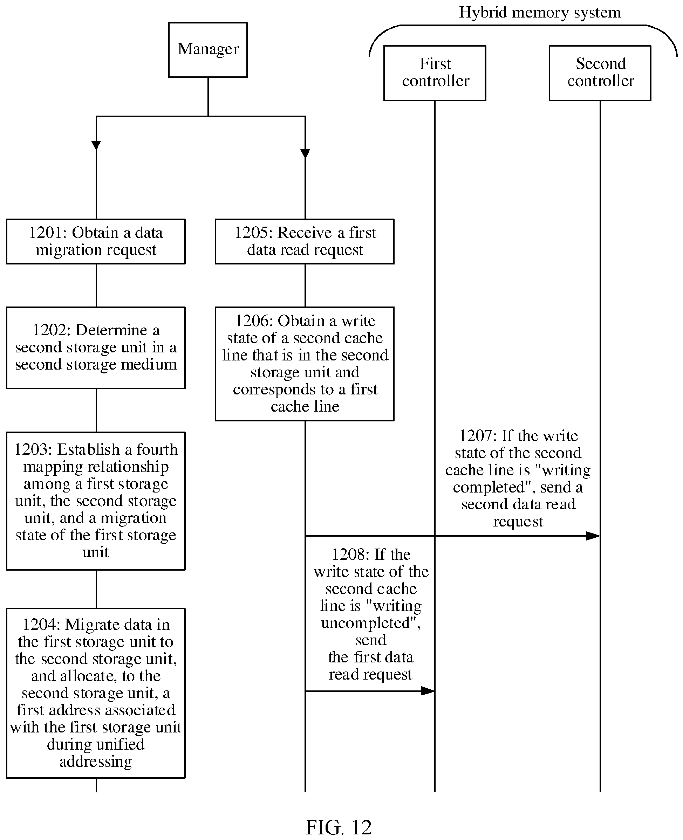

In some embodiments, when the first storage unit in the hybrid memory system is in a process of data migration, or after the data migration is completed, the application may access the first storage unit, and the manager assists, by using a migration state of the first storage unit, the application in completing access to the first storage unit. That the application accesses the first storage unit may be writing data into the first storage unit, or may be reading data from the first storage unit. The following describes, by using the embodiments shown in FIG. 8 and FIG. 12, a process in which the manager assists the application in writing the data into the first storage unit and a process in which the manager assists the application in reading the data from the first storage unit.

FIG. 8 is a flowchart of accessing a storage unit in a case in which data migration and data writing are performed in parallel according to this application. The method is applied to a hybrid memory system. The hybrid memory system includes a first storage medium and a second storage medium. The method is performed by a manager of the hybrid memory system. The method includes the following steps.

Step 801: The manager obtains a data migration request, where the data migration request indicates to migrate data in a first storage unit in the first storage medium to the second storage medium.

Step 801 is similar to the foregoing step 401, and step 801 is not described herein again in this embodiment of this application.

Step 802: The manager determines a second storage unit in the second storage medium based on the data migration request, where the second storage unit does not participate in unified addressing in the hybrid memory system.

For example, after the data migration request is received, the second storage unit is determined from candidate units of the second storage medium. This process is described in step 402.

Step 803: The manager establishes a fourth mapping relationship among the first storage unit, the second storage unit, and a migration state of the first storage unit, where the migration state indicates migration progress of the first storage unit.

The migration state includes "being migrated" and "migrated", where "being migrated" indicates that the data in the first storage unit is being migrated to the second storage unit, and the "migrated" indicates that the data in the first storage unit has been migrated to the second storage unit. In addition, for ease of descriptions, when data migration is performed on a storage unit, the storage unit is referred to as a source storage unit (for example, the first storage unit), and a storage unit used to store migrated data of the storage unit is referred to as a destination storage unit (for example, the second storage unit).

In a possible implementation, the manager stores a migration table, and the manager establishes the fourth mapping relationship among the first storage unit, the second storage unit, and the migration state of the first storage unit.

The migration table shown in Table 5 is used as an example. The migration table includes a plurality of migration entries, and each migration entry includes a migration state, a source address, a source medium attribute identifier, a destination address, and a destination migration attribute identifier of the to-be-migrated data. In Table 5, a migration state 1 indicates "being migrated", and a migration state 0 indicates "migrated". In some other embodiments, the migration state 0 indicates "being migrated", and the migration state 1 indicates the "migrated". The source address is a second address of the source storage unit of the to-be-migrated data, the source medium attribute identifier is a medium attribute identifier of the storage medium to which the source storage unit belongs, the destination address is a second address of the destination storage unit of the to-be-migrated data, and the destination medium attribute identifier is a medium attribute identifier of the storage medium to which the destination storage unit belongs.

**Table 5**

| Migration state | Source address | Source medium attribute identifier | Destination address | Destination medium attribute identifier | Cache line state |
|---|---|---|---|---|---|
| 1 | 000001 | "DDR" | 000010 | "PCM" | 001001001 |
| 0 | XXX | XXX | XXX | XXX | XXX |
| 0 | XXX | XXX | XXX | XXX | XXX |
| ... | ... | ... | ... | ... | ... |

The manager uses "being migrated" as the migration state, uses the second address of the first storage unit as the source address, uses the medium attribute identifier of the first storage medium as the source medium attribute identifier, uses the second address of the second storage unit as the destination address, uses the medium attribute identifier of the second storage medium as the destination medium attribute identifier, and adds a target migration entry to the migration table, to establish the fourth mapping relationship among the first storage unit, the second storage unit, and the migration state of the first storage unit.

For example, the first storage unit is a storage unit indicated by a second address "000001" in the DDR, and the second storage unit is a storage unit indicated by a second address "000010" in the PCM. The manager adds the target migration entry to a first row of the migration table shown in Table 5.

In addition, each storage unit in the hybrid memory system includes a plurality of cache lines. In some embodiments, as shown in Table 5, the migration entry in the migration table further includes a cache line state, the cache line state includes a plurality of state bits, the plurality of state bits are in one-to-one correspondence with the plurality of cache lines of the destination storage unit, and the state bit is used to store a write state of the cache line, to indicate progress of writing data into the cache line.

The write state includes "writing completed" and "writing uncompleted". "writing completed" indicates that the data has been written into the cache line, and "writing uncompleted" indicates that the data has not been written into the cache line. In Table 5, a write state 1 indicates "writing completed", and a write state 0 indicates "writing uncompleted". In some other embodiments, the write state 0 indicates "writing completed", and the write state 1 indicates "writing uncompleted".

In a case in which the migration entry includes a cache state, when a migration entry corresponding to the first storage unit is added to the migration table, the manager sets a cache line state in the migration entry to "writing uncompleted", to indicate that data writing is not completed in cache lines of the second storage unit. A write state of each cache line of the destination storage unit is recorded using a cache line state, so that the manager confirms progress of data migration.

The cache line state is an optional item in the migration table. In some embodiments, the migration table does not include the cache line state. For example, when the manager does not have a requirement for a write state of a cache line of the destination storage unit, the migration table does not include the cache line state.

Step 804: The manager migrates the data in the first storage unit to the second storage unit, and allocates, to the second storage unit, a first address associated with the first storage unit during the unified addressing.

Step 804 is similar to the foregoing step 402 and step 403, and step 804 is not described herein again.

In addition, in a migration read process of data migration, a first controller sequentially reads data from cache lines of the first storage unit according to a sequence of the cache lines of the first storage unit, and then sequentially sends the data in the cache lines to the manager. In addition, when processing a request for accessing a storage unit (for example, a data access request of an application, a migration read request of the manager, or a migration write request of the manager), the manager preferentially processes, according to a first-come-first-processing rule, a request that is obtained first, and then processes a request that is obtained later. Therefore, in a case in which the migration table includes a cache state, each time the manager receives data in one cache line of the first storage unit, the manager queries, based on a location of the cache line in the first storage unit, the migration table for a write state of a target cache line that is of the second storage unit and corresponds to the cache line. If the write state is "writing uncompleted", the manager updates the write state to the write state. A location of the target cache line in the second storage unit is the same as the location of the cache line in the first storage unit. If the write state is "writing completed", the manager discards the currently received data, and abandons a subsequent migration write operation of the cache line.

In a migration write process of data migration, when the manager sends first data in the migration write request to a second controller of the second storage unit, the manager sequentially sends the data in the cache lines of the first storage unit to the second controller according to the sequence of the cache lines of the first storage unit.

After migration on the first storage unit is completed, the manager updates the migration state of the first storage unit to "migrated", to indicate that the data in the first storage unit has been migrated to the second storage unit. Then, the manager allocates, to the second storage unit, the first address associated with the first storage unit during the unified addressing. In addition, in some embodiments, when the migration state of the first storage unit is updated to "migrated", it is further indicated that the migration entry in which the migration state is located is invalid. Correspondingly, when the migration state is updated to "being migrated", the migration entry in which the migration state is located is a valid entry. Then, the migration state may be queried in the valid entry in the migration table, to reduce a quantity of migration entries to be queried when the migration table is queried.

Step 805: The manager receives a first data write request of the application, where the first data write request indicates to write the data into the first storage unit.

The first data write request is a data access request of an application, and the first data write request includes a physical address of the first storage unit and second data to be written into the physical address.

It should be understood that the application first sends the first data write request to a processor. In this case, the first data write request includes a virtual address of the first storage unit and the second data. The processor queries a first unit mapping table, and the virtual address of the first storage unit in the first data write request is converted into the physical address. Then, the processor sends, to the manager, a first data write request obtained through address conversion. Correspondingly, the first data write request received by the manager includes the virtual address of the first storage unit instead of the physical address of the first storage unit.

Step 806: The manager queries the migration state of the first storage unit based on the first data write request, where the migration state indicates the migration progress of the first storage unit.

In a possible implementation, the manager queries the second address of the first storage unit in a third mapping relationship based on the physical address of the first storage unit in the first data write request. For example, the manager uses the physical address of the first storage unit as a first address of the first storage unit, queries the first address of the first storage unit in first addresses recorded in the third unit mapping table, and obtains the second address of the first storage unit and the medium attribute identifier of the first storage medium in a third mapping entry in which the found first address is located.

Then, the manager queries the migration table for the migration state of the first storage unit based on the second address of the first storage unit. For example, the manager queries the second address of the first storage unit and the medium attribute identifier of the first storage medium from the source address and the source medium attribute identifier that are recorded in the migration table. If it is found that the second address of the first storage unit and the medium attribute identifier of the first storage medium are located in a same migration entry (that is, the target migration entry) in the migration table, the manager obtains the migration state of the first storage unit from the target migration entry. For another example, a migration entry in which a migration state is "migrated" in the migration table is used as an invalid migration entry, and a migration entry in which a migration state is "being migrated" in the migration table is used as a valid migration entry. The second address of the first storage unit and the medium attribute identifier of the first storage medium are queried from source addresses and source medium attribute identifiers of valid migration entries in the migration table. If it is found that the second address of the first storage unit and the medium attribute identifier of the first storage medium are located in a same valid migration entry in the migration table, the migration state of the first storage unit is "being migrated".

Step 807: If the migration state is "being migrated", the manager converts the first data write request into a second data write request, and sends the second data write request to the second storage medium.

The second data write request indicates to write the second data into the second storage unit, and correspondingly, the second data write request includes the second address of the second storage unit and the second data.

If the migration state is "being migrated", it indicates that the manager is migrating the first data in the first storage unit to the second storage unit. Before the first data write request, the manager has performed data migration on the first storage unit. The second data in the first data write request is latest data of the first storage unit, and the second storage unit is the destination storage unit of the first storage unit. Therefore, the manager modifies the physical address of the first storage unit in the first data write request to the second address of the second storage unit, to obtain the second data write request, and sends the second data write request to the second storage medium.

For example, the manager sends the second data write request to the second controller of the second storage medium, and the second controller writes the second data in the second data write request into the second storage unit based on the second data write request. In addition, if a part of data has been migrated to the second storage unit at this time, when the second data is written into the second storage unit, if a storage location of the migrated part of data is the same as a storage location of the second data, the second data overwrites the migrated data, thereby ensuring that data in the second storage unit is latest data of the first storage unit.

In some embodiments, in the case in which the migration table stores the cache line state, if the migration state is "being migrated", the manager further determines, based on an offset address of the second data in the first storage unit in the first data write request, a cache line (referred to as a third cache line) into which the second data is to be written in the first storage unit, and obtains a write state of a cache line (referred to as a fourth cache line) that is in the second storage unit and that corresponds to the third cache line. If the write state of the fourth cache line is "writing completed", the manager sends the second data write request to the second storage medium, to overwrite data previously migrated to the fourth cache line. If the write state of the fourth cache line is "writing uncompleted", the manager updates the write state of the fourth cache line to "writing completed", and sends the second data write request to the second storage medium. Then, if data in the third cache line is read based on the migration read request, and the write state of the fourth cache line is "writing completed", the manager discards the data read from the third cache line, and does not write, in the migration write process, the data read from the third cache line into the fourth cache line, so that the data in the third cache line is prevented from overwriting the second data in the fourth cache line.

A location of the third cache line in the first storage medium is the same as a location of the fourth cache line in the second storage medium. The manager obtains the write state of the fourth cache line based on the location of the third cache line in the first storage medium and a cache state of the target migration entry in the migration table. The location of the third cache line in the first storage medium is the same as a location of the write state of the fourth cache line in the cache state.

If the migration state of the first storage unit is "migrated", and the first address associated with the first storage unit has not been allocated to the second storage unit, the manager further first allocates, to the second storage unit, the first address associated with the first storage unit, and then sends the second data write request to the second storage medium.

Step 808: If the migration state is not found, the manager sends the first data write request to the first storage medium.

For example, if the manager does not find the target migration entry in the valid migration entries in the migration table, it indicates that the data in the first storage unit is not migrated to the second storage unit, and the second data in the first data write request is latest data to be written into the first storage unit. Therefore, the manager modifies the physical address of the first storage unit in the first data write request to the second address of the first storage unit, and sends a first data write request to the first storage medium.

For example, the manager sends the first data write request to the first controller of the first storage medium, and the first controller writes the second data in the first data write request into the first storage unit based on the first data write request, to overwrite the original first data in the first storage unit, thereby ensuring that the second data in the first storage unit is latest data.

The data migration method shown in FIG. 8 can achieve the beneficial effects that can be achieved by the data migration method shown in FIG. 4. In addition, in the data migration process, the data access request (for example, a data write request) of the application is routed to the first storage medium or the second storage medium by querying a mapping relationship in the third unit mapping table and the migration state in the migration table. After the migration is completed, an address of the second storage unit is allocated to the application, to ensure that the application writes latest data into the to-be-accessed address.

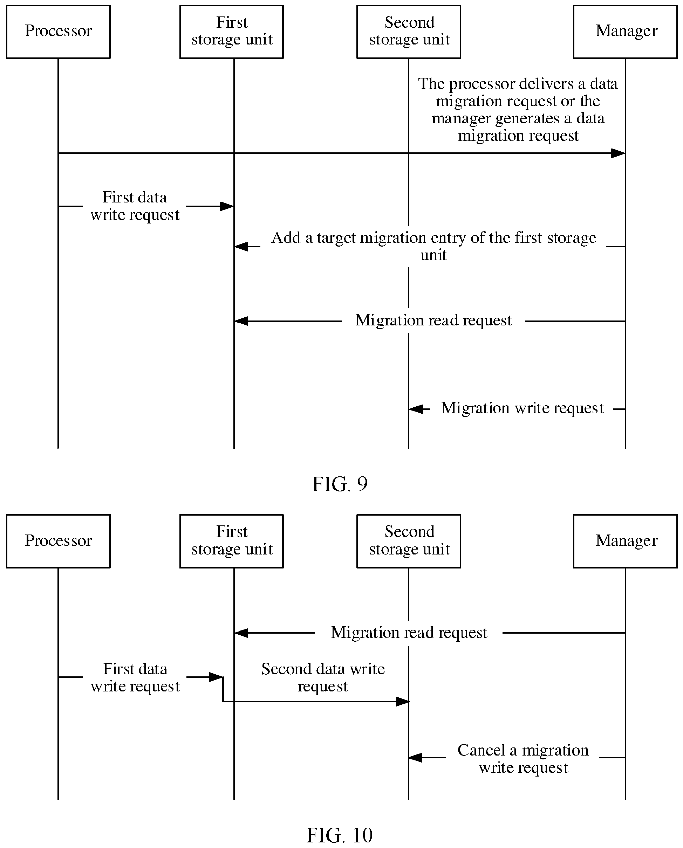

FIG. 8 shows a process in which the manager processes the first data write request of the first storage unit by maintaining the migration state of the first storage unit and the cache line state of the second storage unit. However, any one of step 805 to step 808 may be performed before, after, or during step 801 to step 804. Therefore, the first data write request may reach the manager before or after the migration read request, or may reach the manager before or after the migration write request. For ease of understanding, the following describes a data migration process with reference to FIG. 9 to FIG. 11 from perspectives of different moments at which a first data write request reaches a manager.

FIG. 9 is a diagram of a data migration process in a case in which a first data write request reaches a manager before a migration read request according to this application. As shown in FIG. 9, a processor delivers a data migration request for a first storage unit to the manager, or the manager generates a data migration request. Then, before generating the migration read request based on the data migration request or when generating the migration read request based on the data migration request, the manager adds a target migration entry of the first storage unit to a migration table. When generating the migration read request, the manager further sets a migration state of the first storage unit in the target migration entry to "being migrated".

As shown in FIG. 9, the first data write request delivered by the processor to the manager reaches the manager before the migration read request is generated. If the target migration entry does not exist in the migration table, the manager finds no target migration entry in the migration table based on the first data write request. In this case, the first data write request does not hit the migration table, which indicates that data in the first storage unit has not been migrated at this time. Therefore, the manager delivers the first data write request to a first storage medium to which the first storage unit belongs, to write latest data into the first storage unit. Then, the migration read request for the first storage unit is generated, the latest data is read from the first storage unit by using the migration read request, and the latest data is written into a second storage unit by using a migration write request.

FIG. 10 is a diagram of a data migration process in a case in which a first data write request reaches a manager after a migration read request and before a migration write request according to this application. When generating the migration read request based on a data migration request, the manager sets a migration state of a first storage unit to "being migrated" in a target migration entry in a migration table.

As shown in FIG. 10, after generating the migration read request, the manager receives the first data write request delivered by a processor to the manager. The manager first sends the migration read request to a first storage medium, to read data in the first storage unit by using the migration read request, and then processes the first data write request.

When the first data write request is processed, because the target migration entry exists in the migration table at this time, the target migration entry is found in the migration table based on the first data write request. In this case, the first data write request hits the migration table, which indicates that the first storage unit is in migration, and the data in the first storage unit is finally to be stored in a second storage unit. Therefore, the manager changes a physical address of the first storage unit in the first data write request to a second address of the second storage unit, to obtain a second data write request, and writes latest data into the second storage unit. In addition, the manager further modifies, based on the second data write request, a cache line state of the second storage unit in the target migration option in the migration table to "writing completed".

Then, the manager generates the migration write request based on the data read from the first storage unit, and finds, based on the migration write request, that the cache line state of the second storage unit in the target migration option in the migration table is "writing completed". In this case, the manager cancels sending the migration write request to a second storage medium, so that old data in the first storage unit is prevented from overwriting latest data written by using the second data request.

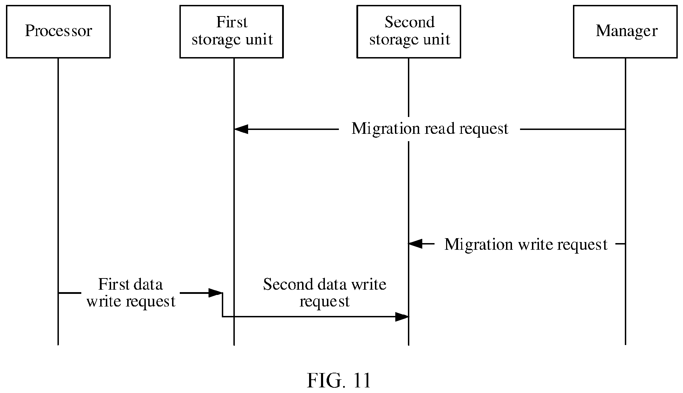

FIG. 11 is a diagram of a data migration process in a case in which a first data write request reaches a manager after a migration write request according to this application. When generating a migration read request based on a data migration request, the manager sets a migration state of a first storage unit to "being migrated" in a target migration entry in a migration table.

As shown in FIG. 11, the manager reads data in the first storage unit by using the migration request, generates the migration write request based on the data read from the first storage unit, and writes the read data into a second storage unit by using the migration write request. Then, the manager receives the first data write request of a processor for the first storage unit. At this time, old data of the first storage unit is being written into the second storage unit or has been written into the second storage unit. In this case, the manager modifies a physical address of the first storage unit in the first data write request to a second address of the second storage unit, to obtain a second data request write request, and writes latest data into the second storage unit by using the second data write request, to overwrite the old data of the first storage unit.

FIG. 12 is a flowchart of accessing a storage unit in a case in which data migration and data reading are performed in parallel according to this application. The method is applied to a hybrid memory system. The hybrid memory system includes a first storage medium and a second storage medium. The method is performed by a manager of the hybrid memory system. The method includes the following steps.

Step 1201: The manager obtains a data migration request, where the data migration request indicates to migrate data in a first storage unit in the first storage medium to the second storage medium.

Step 1201 is similar to the foregoing step 401, and step 1201 is not described herein again in this embodiment of this application.

Step 1202: The manager determines a second storage unit in the second storage medium based on the data migration request, where the second storage unit does not participate in unified addressing in the hybrid memory system.

For example, after the data migration request is received, the second storage unit is determined from candidate units of the second storage medium. This process is described in step 402.

Step 1203: The manager establishes a fourth mapping relationship among the first storage unit, the second storage unit, and a migration state of the first storage unit, where the migration state indicates migration progress of the first storage unit.

Step 1204 is similar to step 803, and step 1203 is not described herein again in this embodiment of this application.

Step 1204: The manager migrates the data in the first storage unit to the second storage unit, and allocates, to the second storage unit, a first address associated with the first storage unit during the unified addressing.

Step 1204 is similar to step 804, and step 1204 is not described herein again in this embodiment of this application.

Step 1205: The manager receives a first data read request of an application, where the first data read request indicates to read the data from a first cache line of the first storage unit.

The first data read request is a data access request of the application, and the first data write request includes a physical address of the first storage unit and an offset address of the first cache line of the first storage unit. The first cache line is any cache line in the first storage unit. It should be understood that the application first sends the first data read request to a processor. In this case, the first data read request includes a virtual address of the first storage unit and the offset address. The processor queries a first unit mapping table, and the virtual address of the first storage unit in the first data read request is converted into the physical address. Then, the processor sends, to the manager, a first data read request obtained through address conversion. Correspondingly, the first data read request received by the manager includes the virtual address of the first storage unit instead of the physical address of the first storage unit.

Step 1206: The manager obtains, based on the first data read request, a write state of a second cache line that is of the second storage unit and corresponds to the first cache line, where the write state indicates progress of writing the data into the second cache line.

A location of the first cache line in the first storage medium is the same as a location of the second cache line in the second storage medium.

In a possible implementation, the manager queries the migration state of the first storage unit based on the first data read request. For this process, refer to that the manager queries the migration state of the first storage unit based on the first data write request,

Then, if it is found that the migration state of the first storage unit is "being migrated", the manager queries a cache state of the second storage unit in a migration table for the write state of the second cache line based on the offset address of the first cache line. For example, in a process in which the manager queries the cache state of the second storage unit in the migration table for the write state of the second cache line based on the offset address of the first cache line, for example, the manager obtains, based on a location indicated by the offset address of the first cache line, a write state that is in the cache state of the second storage unit and is in the location as the write state of the second cache line.

Step 1207: If the write state of the second cache line is "writing completed", the manager converts the first data read request into a second data read request, and sends the second data read request to the second storage medium, where "writing completed" indicates that the data has been written into the second cache line, and the second data read request indicates to read the data from the second cache line.

The second data write request includes a second address of the second storage unit and an offset address of the second cache line in the second storage unit.

If the migration state of the first storage unit is "being migrated", and the write state of the second cache line is "writing completed", it indicates that the manager is migrating the data in the first storage unit to the second storage unit, and the data in the first cache line has been migrated to the second cache line. To enable the application to read the data in the first cache line, the manager updates the physical address of the first storage unit in the first data read request to the second address of the second storage unit, to obtain the second data read request. In the second data read request, the offset address of the first cache line in the first storage unit is equivalent to the offset address of the second cache line in the second storage unit.

For example, the manager sends the second data read request to a second controller of the second storage medium, and the second controller reads the data (referred to as third data) in the second cache line of the second storage unit based on the second address of the second storage unit and the offset address in the second data write request, and returns the third data to the manager. Then, the manager uses the third data as a read completion response to the first data read request, and sends the read completion response to the application.

Step 1208: If the write state of the second cache line is "writing uncompleted", the manager sends the first data read request to the first storage medium.

If the write state of the second cache line is "writing uncompleted", it indicates that the data in the first cache line has not been migrated to the second cache line at this time. In this case, and the manager modifies the physical address of the first storage unit in the first storage data read request to a second address of the first storage unit, and sends a first data read request to the first storage medium.

Alternatively, if a target migration entry is not found in valid migration entries in the migration table, it indicates that the data in the first storage unit is not migrated to another storage unit. In this case, the data stored in the first storage unit is latest data, and the manager does not need to query the write state of the second cache line and does not need to perform step 1207. The manager changes the physical address of the first storage unit in the first data read request to the second address of the first storage unit, and sends a modified first data read request to the first storage medium.

A process in which the manager sends the first data read request to the first storage medium is similar to a process in which the manager sends the second data read request to the second storage medium. Details are not described herein again.

The data migration method shown in FIG. 12 can achieve the beneficial effects that can be achieved by the data migration method shown in FIG. 4. In addition, in the data migration process, an access request (for example, a data read request) of the application is routed to the first storage medium or the second storage medium by querying a mapping relationship in a third unit mapping table and the migration state in the migration table. After the migration is completed, an address of the second storage unit is allocated to the application, to ensure that the application reads latest data in the to-be-accessed address.

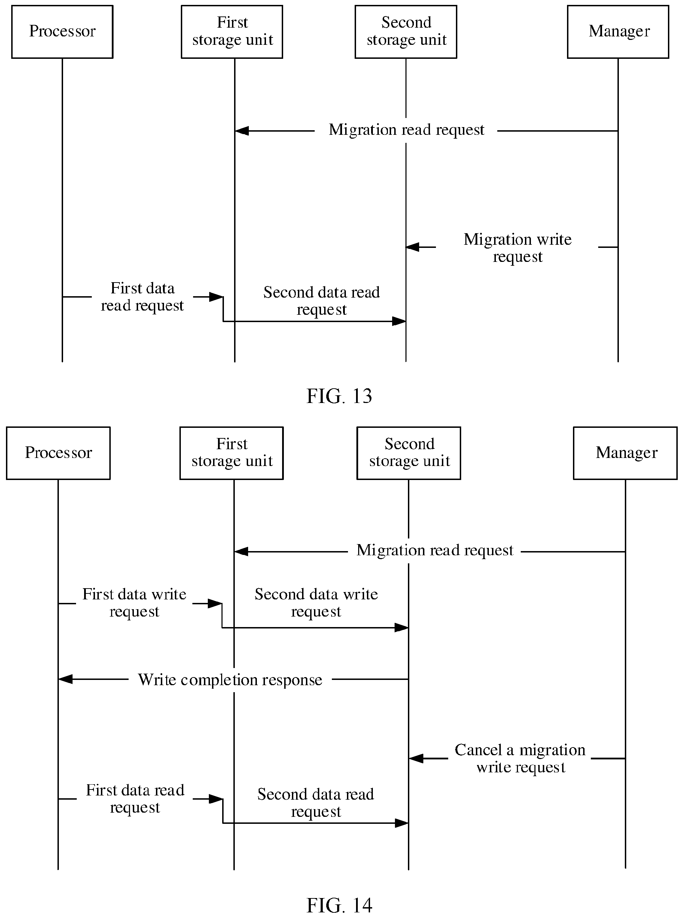

FIG. 12 shows a process in which the manager processes the first data read request of the first storage unit by maintaining the migration state of the first storage unit and the cache line state of the second storage unit from an overall perspective. However, any one of step 1205 to step 1208 may be performed before, after, or during step 1201 to step 1204. Therefore, the first data read request may reach the manager before or after a migration read request in the data migration process, or may reach the manager before or after a migration write request. For ease of understanding, the following describes a data migration process with reference to FIG. 13 from a perspective of a moment at which a first data read request reaches a manager.

FIG. 13 is a diagram of a data migration process in a case in which a first data read request reaches a manager after a migration write request according to this application. As shown in FIG. 13, the manager generates a migration read request based on a data migration request for a first storage unit, and sends the migration read request to a first storage medium, to read data from the first storage unit; and then generates the migration write request based on the read data, and sends the migration write request to a second storage medium, to write the read data into a second storage unit. In addition, when sending the migration write request to the second storage medium, the manager invalidates a target migration entry in a migration table. In addition, when sending the migration write request to the second storage medium, the manager updates, to a second address of the second storage unit, a second address of the first storage unit in a third mapping unit entry in which a first address associated with the first storage unit is located in a third mapping unit table, and allocates the first address to the second storage unit.

As shown in FIG. 13, if the manager receives a first data read request of a processor for the first storage unit after sending the migration write request to the second storage medium, data in the first storage unit is written into the second storage unit in advance, and the second address in the third mapping unit entry in which the first address is located is already updated to the second address of the second storage unit at this time, the manager modifies a physical address of the first storage unit in the first data read request to the second address of the second storage unit, to obtain a second data read request, and sends the second data read request to the second storage medium, to read latest data in the first address from the second storage unit.

In some other embodiments, if the manager receives the first data read request for the first storage unit from the processor before sending the migration write request to the second storage medium, data in the first storage unit has not been migrated at this time, and the second address in the third mapping unit entry in which the first address is located is still the second address of the first storage unit, the manager modifies a physical address of the first storage unit in the first data read request to the second address of the first storage unit, and sends a first data read request to the first storage medium, to read latest data in the first address from the first storage unit.

FIG. 9 to FIG. 13 are described using a case in which a data migration process and a process in which a processor accesses a storage unit once are performed in parallel. However, in the embodiment shown in FIG. 14, a data migration process and a process in which a processor accesses a storage unit for a plurality of times may also be performed in parallel. FIG. 14 is a diagram of a data migration process in a case in which a processor accesses a first storage unit twice according to this application.

As shown in FIG. 14, in a process of performing data migration on the first storage unit, a manager first sends a migration read request to a first storage medium, to read data from the first storage unit. Then, the manager receives a first data write request of the processor for the first storage unit, and sends a second data write request to a second controller based on the first data write request, to write latest data of a first address into a second storage unit. After writing into the second storage unit is completed, the second controller sends a write completion response to the manager, and the manager forwards the write completion response to the processor. In addition, when the manager writes the data into the second storage unit,
In addition, when the manager sends the second data write request to the second memory controller, the manager further modifies a cache line state of the second storage unit to "writing completed". Then, if receiving a first data read request for the first storage unit, the manager converts the first data read request into a second data read request, and sends the second data read request to the second controller, to read latest data from the second storage unit.

In addition, after modifying the cache line state of the second storage unit to "writing completed", for a migration write request generated based on the read data, the manager cancels, based on a current cache line state of the second storage unit, sending the migration write request to the second controller.

It should be understood that FIG. 14 shows a case in which the processor accesses twice a storage unit from which data is to be migrated in the data migration process. In another embodiment, in the data migration process, there may also be a case in which the processor accesses a storage unit from which data is to be migrated more than twice. For any process in which the processor accesses a storage unit from which data is to be migrated, if the processor writes data into a storage unit to which data is migrated, reference may be made to a process in which the manager processes the first data write request in FIG. 8; and if the processor reads data in a storage unit to which data is migrated, reference may be made to a process in which the manager processes the first data read request in FIG. 12.

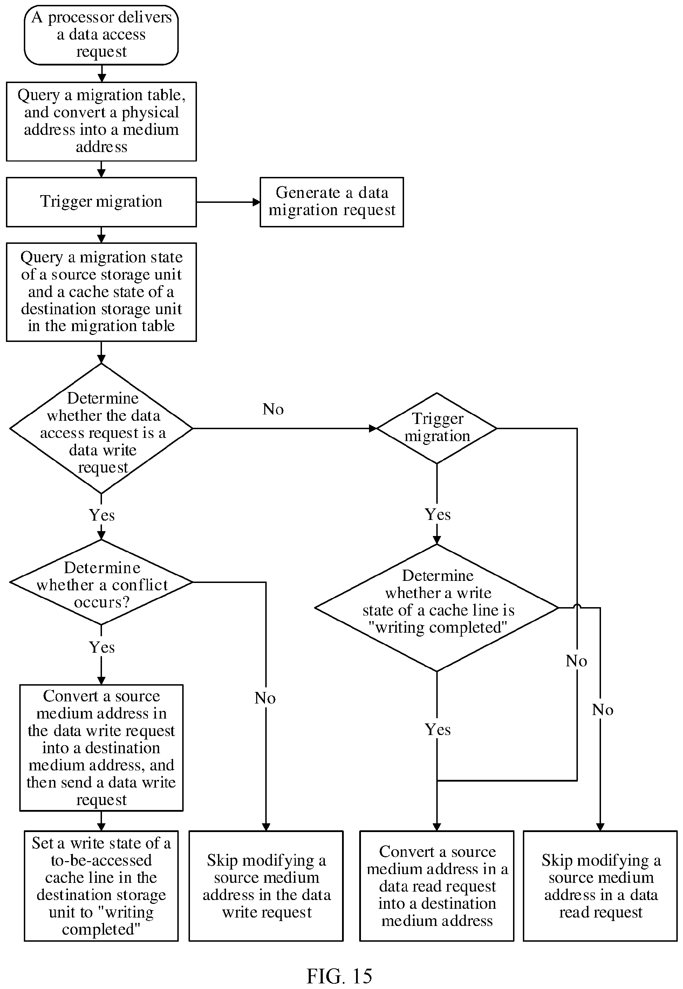

With reference to a flowchart of data migration based on an access command of a processor according to this application shown in FIG. 15, a data migration process provided in this application is described as follows.

The processor delivers a data access request for a storage medium in a hybrid memory system to a manager. The manager queries, based on a physical address of a to-be-accessed storage unit in the data access request, a second unit mapping table for a medium address corresponding to the physical address and a trigger identifier, and converts the physical address in the data access request into a source medium address (that is, a second address of the to-be-accessed storage unit). If the found trigger identifier is a first trigger identifier, data migration is triggered, and the manager generates a data migration request for the to-be-accessed storage unit.

In addition, in a process of processing the data access request, the manager queries a migration state of the source storage unit and a cache state of a destination storage unit in a migration table based on the data access request. If the data access request is a data write request, the data write request hits the migration table, and the migration state of the source storage unit is "being migrated" in this case, the data write request conflicts with the data migration request, the source medium address in the data write request is converted into a destination medium address (that is, a second address of the destination storage unit), then the destination medium address is sent to a controller of the destination storage unit and delivered, and a write state of a to-be-accessed cache line of the destination storage unit is set to "writing completed" in a hit migration entry. If the data access request does not hit the migration table, sending of the data write request does not conflict with sending of the data migration request, and the manager does not modify the source medium address in the data write request, and sends the data write request to a controller of the to-be-accessed storage unit.

If the data access request is not a data write request but a data read request, the data read request hits the migration table, and the migration state of the source storage unit is "being migrated" in this case, the data read request conflicts with the data migration request. If a write state of a to-be-read cache line in the data read request is "writing completed", the manager modifies the source medium address in the data read request to a destination medium address, and sends a data read request to a controller of the destination storage unit. If a write state of a to-be-read cache line in the data read request is "writing uncompleted", the manager does not modify the source medium address in the data read request, and sends the data read request to a controller of the to-be-accessed storage unit.

The method embodiments shown in FIG. 4 to FIG. 15 are described using an example in which the manager processes data migration once. In some other embodiments, a manager periodically performs data migration on storage units that participate in unified addressing in a hybrid memory system. For example, in each migration periodicity, the manager and/or a processor detects whether the storage units that participate in the unified addressing in the hybrid memory system meet a migration condition, and generates a migration list (list) based on a storage unit that meets the migration condition, where the migration list includes at least one data migration request, and each data migration request indicates to perform data migration on one storage unit that meets the migration condition. The manager sequentially processes data migration requests in the migration list. For a process of processing each data migration request, refer to the embodiments shown in FIG. 4 to FIG. 15. After each data migration request in the migration list is processed, a next migration periodicity starts.

The foregoing describes the data migration method provided in this application. The following further describes an apparatus, a chip, and an electronic device provided in this application with reference to the accompanying drawings. It should be understood that the apparatus, the chip, and the electronic device described below may implement any function of the manager or a part of the manager of the hybrid memory system in any one of the foregoing methods.

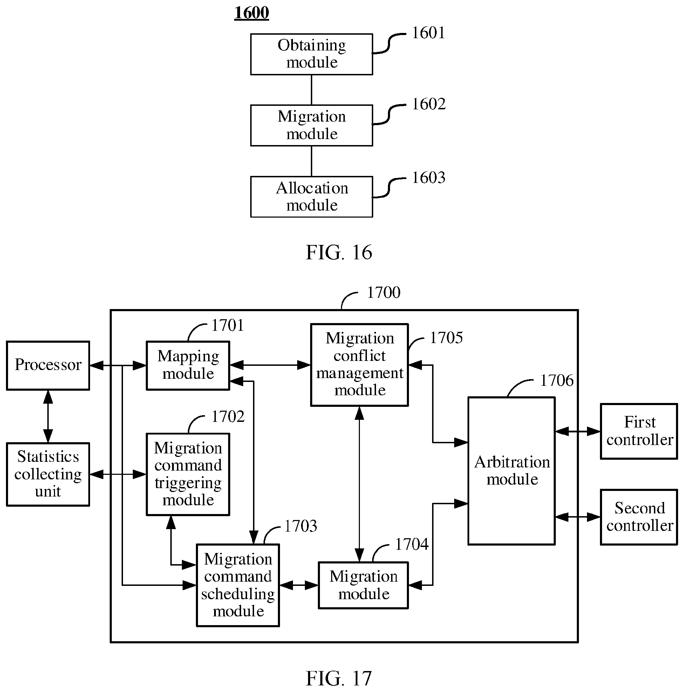

FIG. 16 is a diagram of a structure of a data migration apparatus according to this application. The apparatus 1600 shown in FIG. 16 may be the manager or a part of the manager of the hybrid memory system in the foregoing embodiments, and is configured to perform the data migration method performed by the manager. The apparatus 1600 is used in the hybrid memory system. The hybrid memory system includes a first storage medium and a second storage medium. The apparatus 1600 includes:
an obtaining module 1601, configured to obtain a data migration request, where the data migration request indicates to migrate data in a first storage unit in the first storage medium to the second storage medium;
a migration module 1602, configured to migrate the data in the first storage unit to a second storage unit in the second storage medium, where the second storage unit does not participate in unified addressing in the hybrid memory system; and
an allocation module 1603, configured to allocate, to the second storage unit, a first address associated with the first storage unit during the unified addressing.

It should be understood that the apparatus 1600 in this embodiment of this application may be implemented by a CPU, or may be implemented by an application-specific integrated circuit (application-specific integrated circuit, ASIC), or may be implemented by a programmable logic device (programmable logic device, PLD). The PLD may be a complex programmable logical device (complex programmable logical device, CPLD), a field programmable gate array (field programmable gate array, FPGA), a generic array logic (generic array logic, GAL), a data processing unit (data processing unit, DPU), a system-on-chip (system-on-chip, SoC), or any combination thereof. The apparatus 1600 may also implement the methods shown in FIG. 4 to FIG. 15 through software. When the methods are implemented through the software, the apparatus 1600 and the modules of the apparatus 1600 may also be software modules.

In a possible implementation, there is a mapping relationship between the first address and a second address of the first storage unit in the first storage medium, to indicate to allocate the first address to the first storage unit. The allocation module 1603 is configured to:
modify the second address in the mapping relationship to a second address of the second storage unit in the second storage medium.

In another possible implementation, the apparatus module 1600 further includes a first processing module, configured to:
receive a first data write request of an application, where the first data write request indicates to write the data into the first storage unit;
query a migration state of the first storage unit based on the first data write request, where the migration state indicates migration progress of the first storage unit; and
if the migration state is "being migrated", convert the first data write request into a second data write request, where "being migrated" indicates that the data in the first storage unit is being migrated to the second storage unit, and the second data write request indicates to write the data into the second storage unit.

**In** another possible implementation, the apparatus module 1600 further includes a second processing module, configured to:
receive a first data read request of an application, where the first data read request indicates to read the data from a first cache line of the first storage unit;
obtain, based on the first data read request, a write state of a second cache line that is of the second storage unit and corresponds to the first cache line, where the write state indicates progress of writing the data into the second cache line; and
if the write state is "writing completed", convert the first data read request into a second data read request, where "writing completed" indicates that the data has been written into the second cache line, and the second data read request indicates to read the data from the second cache line.

The first processing module and the second processing module may be a same module or may be different modules.

In another possible implementation, the obtaining module 1601 includes:
a detection submodule, configured to perform data migration detection on the first storage medium; and
a generation subunit, configured to generate the data migration request if it is detected that the first storage unit meets a migration condition.

In another possible implementation, that the first storage unit meets a migration condition includes that a quantity of accesses to the first storage unit reaches a value range of a migration threshold. The detection submodule is configured to: detect a data access request sent to the hybrid memory system, where the data access request indicates to access a storage unit in the hybrid memory system; and obtain, based on the detected data access request, the quantity of accesses to the first storage unit.

In another possible implementation, that the first storage unit meets the migration condition includes that an access delay of the first storage medium is less than an access delay of the second storage medium, a quantity of idle storage units in the first storage medium is less than or equal to a quantity threshold, and the first storage unit is a non-idle storage unit whose quantity of accesses does not reach an access threshold. The detection submodule is configured to: obtain a quantity of accesses to each storage unit in the first storage medium; and determine an idle storage unit and a non-idle storage unit in the first storage medium based on the quantity of accesses to each storage unit in the first storage medium.

In another possible implementation, the apparatus 1600 further includes: a generation module, configured to generate the data migration request if it is detected that the first storage unit meets the migration condition and a data access request of an application for the first storage unit is received.

In another possible implementation, the apparatus 1600 further includes: a determining module, configured to determine the second storage unit from a candidate storage unit in the second storage medium, where the candidate storage unit is an idle storage unit that does not participate in the unified addressing.

In another possible implementation, the determining module is further configured to: remove the second storage unit from a candidate storage unit queue; and if the candidate storage unit queue is not full of candidate storage units, add, to the candidate storage unit queue, an idle storage unit that is in the second storage medium and participates in the unified addressing.

All of the foregoing possible implementation solutions may be arbitrarily combined to form optional embodiments of the present disclosure. Details are not described herein again.

FIG. 17 is a diagram of a structure of another data migration apparatus according to this application. As shown in FIG. 17, the apparatus 1700 includes a mapping module 1701, a migration command triggering module 1702, a migration command scheduling module 1703, a migration module 1704, a migration conflict management module 1705, and an arbitration module 1706. The mapping module 1701 is configured to: maintain a second storage unit mapping table, convert, into a medium address, a physical address in a data access request delivered by a processor, send the medium address to the migration conflict management module 1705, and send a data migration request to the migration command scheduling module 1703 in a case in which the data access request triggers migration.

The migration command triggering module 1702 is an optional module. Both the migration command triggering module 1702 and a processor in an electronic device can be configured to: determine, based on quantities of accesses to storage units that participate in unified addressing in a hybrid memory system, a storage unit that meets a migration condition, where the quantities of accesses to the storage units are obtained through statistics collection by a statistics collecting unit, and deliver a data migration request to the migration command scheduling module 1703 based on the storage unit that meets the migration condition. The migration command triggering module 1702 is an optional module.

The migration command scheduling module 1703 is configured to: maintain a candidate storage unit queue of each storage medium (for example, a storage medium connected to a first controller and a second controller) in the hybrid memory system, add a medium address of a destination storage unit to the received data migration request, convert a physical address of a source storage unit in the data migration request into a medium address by querying the second storage unit mapping table, and send, to the migration module 1704, a data migration request that carries the medium address.

The migration module 1704 is configured to: add a migration entry to the migration conflict table management module 1705 based on the received data migration request, process the data migration request (for example, deliver a migration read request and a migration write request to the arbitration module 1706), invalidate the corresponding migration entry after data migration is completed, and notify the migration command scheduling module 1703 to process a next migration request.

The migration conflict table management module 1705 is configured to: maintain a migration table, determine, based on a hit state of the data access request in the migration table, whether to update the medium address in the data access migration request, and then send an updated data access request or the unupdated data access request to the arbitration module 1706.

The arbitration module 1706 is configured to: add, each time one processing request (for example, a data access request, a migration read request, or a migration write request) is received, the processing request to a tail of a sending queue, sequentially send processing requests from a head of the sending queue, add, each time a processing response of one processing request is received, the processing response to a tail of a receiving queue, and sequentially return processing responses from a head of the receiving queue.

For an implementation of the apparatus 1700, refer to the apparatus 1600. The implementation of the apparatus 1700 is not described herein in this embodiment of this application.

It should be understood that, for any one of the apparatus 1600 and the apparatus 1700, the apparatus corresponds to the manager in the foregoing method embodiments, and the modules in the apparatus and the foregoing other operations and/or functions are respectively used to implement various steps and methods implemented by the manager in the method embodiments. For specific details, refer to the foregoing method embodiments. For brevity, details are not described herein again.

It should be understood that, for any one of the apparatus 1600 and the apparatus 1700, when the apparatus performs data migration, division into the foregoing functional modules is merely used as an example for descriptions. During actual application, the foregoing functions may be allocated to different functional modules for implementation according to a requirement, in other words, an internal structure of the apparatus is divided into different functional modules, to implement all or a part of the foregoing described functions. **In** addition, the apparatuses provided in the foregoing embodiments and the foregoing method embodiments pertain to a same concept. For a specific implementation process, refer to the foregoing method embodiments. Details are not described herein again.

It should be understood that any one of the apparatus 1600 and the apparatus 1700 may be equivalent to the managers 104, 104a, and 104b in FIG. 1 to FIG. 3, or equivalent to the execution components in the managers 104, 104a, and 104b.

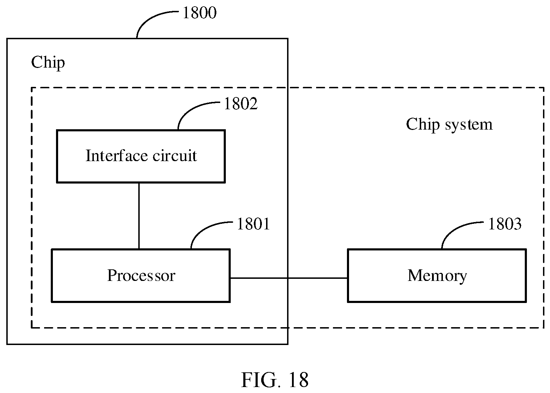

FIG. 18 is a diagram of a structure of a chip according to this application. As shown in FIG. 18, the chip 1800 includes a processor 1801 and an interface circuit 1802. The interface circuit 1802 is configured to receive instructions and transmit the instructions to the processor 1801. The processor 1801 may be, for example, a specific implementation form of the apparatus 1600 or the apparatus 1700, and may be configured to perform the foregoing applied data migration method. The processor 1801 is coupled to a memory 1803, and the memory 1803 is configured to store program code. When the program code is executed by the processor 1801, a chip system including the processor 1801, the interface circuit 1802, and the memory 1803 is caused to implement the operation steps of the method in any one of the method embodiments in FIG. 4 to FIG. 15.

Optionally, there is at least one processor 1801 in the chip system. It should be understood that, in this embodiment of this application, the processor 1801 may be a CPU or another general-purpose processor, or the processor 1801 may be one or more integrated circuits, for example, a digital signal processor (digital signal processor, DSP), an ASIC, a PLD, an FPGA or another programmable logic device, a discrete gate or a transistor logic device, or a discrete hardware component, configured to implement the solutions of this application. The general-purpose processor may be a microprocessor or any conventional processor or the like.

Optionally, there may alternatively be one or more memories 1803 in the chip system. The memory 1803 may be integrated with the processor 1801, or may be disposed separately from the processor 1801. This is not limited in this application. For example, the memory 1803 and the processor 1801 may be integrated into a same chip. As shown in FIG. 18, the memory 1803 and the processor 1801 may alternatively be disposed on different chips. A type of the memory 1803 and a manner of disposing the memory 1803 and the processor 1801 are not specifically limited in this application.

The memory 1803 may include a read-only memory and a random access memory, and provide instructions and data for the processor 1801. The memory 1803 may further include a non-volatile random access memory. For example, the memory 1803 may further store information about a device type. Alternatively, the memory 1803 may be a volatile memory, or may include both a volatile memory and a non-volatile memory.

The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

For example, the chip system may be an FPGA, an ASIC, a SoC, a CPU, a network processor (network processor, NP), a digital signal processing circuit (digital signal processor, DSP), a micro controller unit (micro controller unit, MCU), a PLD, or another integrated chip.

This application further provides a computer-readable storage medium, for example, a memory including program code. The program code may be executed by a processor in an electronic device (or a chip) to complete the data migration method in the foregoing embodiments. For an implementation of the computer-readable storage medium, refer to the memory 1803 in FIG. 18.

This application further provides a computer program product or a computer program. The computer program product or the computer program includes program code. The program code is stored in a computer-readable storage medium. A processor reads the program code from the computer-readable storage medium, and the processor executes the program code, to cause a chip or an electronic device in which the processor is located to perform the foregoing data migration method.

In addition, this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to cause the chip to perform the data migration method in the foregoing method embodiments.

The apparatus, the device, the computer-readable storage medium, the computer program product, or the chip provided in this application is configured to perform the corresponding method provided above. Therefore, for beneficial effects that can be achieved by the apparatus, the device, the computer-readable storage medium, the computer program product, or the chip, refer to the beneficial effects of the corresponding method provided above. Details are not described herein again.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded or executed on a computer, the procedures or functions according to embodiments of the present invention or this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state disk (solid-state disk, SSD).

The foregoing descriptions are merely specific implementations of this application. Any variation or replacement readily figured out by a person skilled in the art based on the specific implementations provided in this application shall fall within the protection scope of this application.

## Claims

1. A data migration method, wherein the method is applied to a hybrid memory system, the hybrid memory system comprises a first storage medium and a second storage medium, and the method comprises:
obtaining a data migration request, wherein the data migration request indicates to migrate data in a first storage unit in the first storage medium to the second storage medium;
migrating the data in the first storage unit to a second storage unit in the second storage medium, wherein the second storage unit does not participate in unified addressing in the hybrid memory system; and
allocating, to the second storage unit, a first address associated with the first storage unit during the unified addressing.

2. The method according to claim 1, wherein there is a mapping relationship between the first address and a second address of the first storage unit in the first storage medium, to indicate to allocate the first address to the first storage unit, and the allocating, to the second storage unit, a first address associated with the first storage unit during the unified addressing comprises:
modifying the second address in the mapping relationship to a second address of the second storage unit in the second storage medium.

3. The method according to claim 1 or 2, wherein the method further comprises:
receiving a first data write request of an application, wherein the first data write request indicates to write the data into the first storage unit;
querying a migration state of the first storage unit based on the first data write request, wherein the migration state indicates migration progress of the first storage unit; and
if the migration state is "being migrated", converting the first data write request into a second data write request, wherein "being migrated" indicates that the data in the first storage unit is being migrated to the second storage unit, and the second data write request indicates to write the data into the second storage unit.

4. The method according to claim 1 or 2, wherein the method further comprises:
receiving a first data read request of an application, wherein the first data read request indicates to read the data from a first cache line of the first storage unit;
obtaining, based on the first data read request, a write state of a second cache line that is of the second storage unit and corresponds to the first cache line, wherein the write state indicates progress of writing the data into the second cache line; and
if the write state is "writing completed", converting the first data read request into a second data read request, wherein "writing completed" indicates that the data has been written into the second cache line, and the second data read request indicates to read the data from the second cache line.

5. The method according to claim 1 or 2, wherein the obtaining a data migration request comprises:
performing data migration detection on the first storage medium; and
generating the data migration request if it is detected that the first storage unit meets a migration condition.

6. The method according to claim 5, wherein that the first storage unit meets a migration condition comprises that a quantity of accesses to the first storage unit reaches a value range of a migration threshold, and the performing data migration detection on the first storage medium comprises:
detecting a data access request sent to the hybrid memory system, wherein the data access request indicates to access a storage unit in the hybrid memory system; and
obtaining, based on the detected data access request, the quantity of accesses to the first storage unit.

7. The method according to claim 5, wherein that the first storage unit meets a migration condition comprises that an access delay of the first storage medium is less than an access delay of the second storage medium, a quantity of idle storage units in the first storage medium is less than or equal to a quantity threshold, and the first storage unit is a non-idle storage unit whose quantity of accesses does not reach an access threshold; and
the performing data migration detection on the first storage medium comprises:
obtaining a quantity of accesses to each storage unit in the first storage medium; and
determining an idle storage unit and a non-idle storage unit in the first storage medium based on the quantity of accesses to each storage unit in the first storage medium.

8. The method according to claim 5, wherein the method further comprises:
generating the data migration request if it is detected that the first storage unit meets the migration condition and a data access request of an application for the first storage unit is received.

9. The method according to any one of claims 1 and 2 and 6 to 8, wherein before the migrating the data in the first storage unit to a second storage unit in the second storage medium, the method further comprises:
determining the second storage unit from a candidate storage unit in the second storage medium, wherein the candidate storage unit is an idle storage unit that does not participate in the unified addressing.

10. The method according to claim 9, wherein the candidate storage unit is located in a candidate storage unit queue of the second storage medium, and after the migrating the data in the first storage unit to a second storage unit, the method further comprises:
removing the second storage unit from the candidate storage unit queue; and
if the candidate storage unit queue is not full of candidate storage units, adding, to the candidate storage unit queue, an idle storage unit that is in the second storage medium and participates in the unified addressing.

11. A data migration apparatus, wherein the apparatus is used in a hybrid memory system, the hybrid memory system comprises a first storage medium and a second storage medium, and the apparatus comprises:
an obtaining module, configured to obtain a data migration request, wherein the data migration request indicates to migrate data in a first storage unit in the first storage medium to the second storage medium;
a migration module, configured to migrate the data in the first storage unit to a second storage unit in the second storage medium, wherein the second storage unit does not participate in unified addressing in the hybrid memory system; and
an allocation module, configured to allocate, to the second storage unit, a first address associated with the first storage unit during the unified addressing.

12. A chip, wherein the chip comprises a processor, and the processor is configured to execute at least one piece of program code, to cause the chip to perform the method according to any one of claims 1 to 10.

13. A computer-readable storage medium, wherein the storage medium stores at least one piece of program code, and the at least one piece of program code is read by a processor, to cause a chip to perform the method according to any one of claims 1 to 10.
